(19) Europäisches Patentamt
European Patent Office
Office européen des brevets

(11) EP 3 041 893 B1

# (12) EUROPÄISCHE PATENTSCHRIFT

(45) Veröffentlichungstag und Bekanntmachung des Hinweises auf die Patenterteilung:
**10.03.2021 Patentblatt 2021/10**

(21) Anmeldenummer: **14756032.0**

(22) Anmeldetag: **22.08.2014**

(51) Int Cl.:
***C09J 7/38*** (2018.01) ***C09J 11/06*** (2006.01)
***C09J 133/04*** (2006.01) ***C09J 133/06*** (2006.01)

(86) Internationale Anmeldenummer:
**PCT/EP2014/067935**

(87) Internationale Veröffentlichungsnummer:
**WO 2015/032635 (12.03.2015 Gazette 2015/10)**

## (54) VERWENDUNG VON HAFTKLEBEBÄNDERN FÜR OPTISCHE ANWENDUNGEN

USE OF PRESSURE-SENSITIVE ADHESIVE TAPES FOR OPTICAL APPLICATIONS

UTILISATION DE BANDES ADHESIVES SENSIBLE A LA PRESSION POUR APPLICATIONS OPTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2013 DE 102013217785**

(43) Veröffentlichungstag der Anmeldung:
**13.07.2016 Patentblatt 2016/28**

(73) Patentinhaber: **tesa SE**
**22848 Norderstedt (DE)**

(72) Erfinder:
- **HUSEMANN, Marc**
**22559 Hamburg (DE)**
- **ELLINGER, Jan**
**20255 Hamburg (DE)**
- **KOOP, Matthias**
**22848 Norderstedt (DE)**
- **LÜBBERT, Niko**
**20535 Hamburg (DE)**

(74) Vertreter: **tesa SE**
**Hugo-Kirchberg-Straße 1**
**22848 Norderstedt (DE)**

(56) Entgegenhaltungen:
**EP-A1- 2 284 388**
**EP-A2- 1 323 802**
**US-A1- 2013 085 215**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 041 893 B1

Printed by Jouve, 75001 PARIS (FR)

## Beschreibung

Klebebänder sind im Zeitalter der Industrialisierung weitverbreitete Verarbeitungshilfsmittel. Insbesondere für den Einsatz in der elektronischen Industrie werden solche Klebebänder sehr häufig eingesetzt. Hierbei müssen diese Klebebänder immer speziellere Anforderungen erfüllen. Insbesondere auf dem Gebiet der Displays elektronischer Geräte werden neben der Verklebung sehr unterschiedliche Anforderungen im Hinblick auf Lichtmanagement gestellt. So müssen Klebebänder lichtreflektierend, lichtabsorbierend oder hochtransparent sein.

Ein spezieller Einsatzbereich ist die Verklebung berührungsempfindlicher Bildschirme (englisch "Touch Panel", im Folgenden wird dieser Begriff verwendet). Solche Bildschirme werde zunehmend eingesetzt, um die Informationseingabe zu erleichtern und auch um die elektronischen Geräte kleiner dimensionieren zu können.

Das Touch Panel wird auf der Anzeigeeinheit (dem Display) direkt oder auf dem Fenster des - insbesondere portablen - Elektronikgerätes verklebt. Daher werden sehr hohe Anforderungen im Hinblick auf Transparenz und Reinheit gestellt, so dass sich die Lichtausbeute des durch das Display erzeugten Bildes nicht verringert. Zudem werden zunehmend kapazitive Touch Panels eingesetzt, da diese Panels Vorteile in der Präzision aufweisen.

Im Zusammenhang mit kapazitiven Touch Panels werden beispielweise Indium-ZinnOxid-Filme (ITO-Filme) eingesetzt, die für die Touch-Panel-Funktion das elektrische Feld erzeugen. Die Anforderungen an ein für die Verklebung solcher Baueinheiten vorgesehenes Klebeband sind relativ hoch. Es muss hochtransparent sein - es werden also vorwiegend optisch klare Klebemassen, auch unter dem Namen OCA bekannt, eingesetzt -, darf nicht mit dem ITO-Film wechselwirken und nicht die elektrische Leitfähigkeit beeinflussen. Ein weiteres Problem ergibt sich daraus, dass der ITO-Film der UV-Strahlung des Tageslichts ausgesetzt ist und hierdurch geschädigt wird, insbesondere kann die UV-Strahlung zu Verfärbungen des ITO-Films führen. UV-Strahlung wird jedoch üblicher Weise durch optisch klare Klebemasse nicht oder wenig absorbiert. Wünschenswert sind daher Klebemassen, die gleichzeitig eine UV-filternde Wirkung aufweisen.

Optisch klare Klebemassen mit UV-Absorbern und daraus hergestellte Produkte sind bereits bekannt (US 2013/0085215). Diese weisen aber Nachteile bzgl. der thermischen Stabilität auf, d.h. diese Produkte vergilben bei thermischer Belastung. Die Absorption von Licht des UV-C-Spektrums wird bei diesen Produkten nicht berücksichtigt und eine daraus resultierende Problematik nicht erkannt. Dieser kurzwellige UV-Bereich ist jedoch relativ energiereich. UV-C Licht kann somit auch in relativ kurzer Zeit einen großen Schaden anrichten. Es ist daher wünschenswert, eine solche optisch klare Klebemasse anzubieten, die auch im UV-C-Wellenlängenbereich Licht absorbieren kann.

Die US 2013/085215 A beschreibt Haftklebstoff-Zusammensetzungen, die aus einem Copolymer und mehreren UV-Additiven bestehen, Das Copolymer wird aus einem Alkyl(meth)acrylat und einem hydroxylgruppenhaltigen Monomer hergestellt. Als UV-Additive werden solche aus der Benzotriazole, Piperidin-Derivate und Malonate eingesetzt.

Auch die Schriften EP 1 323 802 A und EP 2 284 388 offenbaren acrylische Haftklebstoff-Zusammensetzungen, welche aus einem hydroxylgruppenhaltigen Monomer hergestellt sind. Als Additive werden dieselben Verbindungen wie in der vorgenannten Schrift erwähnt.

Aufgabe der Erfindung ist es, eine Haftklebeband für optische Anwendungen zur Verfügung zu stellen, das UV-absorbierende Eigenschaften aufweist, das nicht die elektrische Leitfähigkeit von ITO-Filmen beeinflusst und das die Gelbfärbung von ITO-Filmen minimiert. Vorteilhaft sollte eine solches Klebeband bei thermischer Lagerung bei 70 °C und relativer Feuchte von nicht mehr als 10 % für einen Monat und/oder bei 85 °C und 85 % r.h. für 1000 h im Lab-Farbraum einen b*-Wert von kleiner 1 aufweisen.

Die Aufgabe wird hervorragend gelöst durch eine Haftklebeband, umfassend zumindest eine Schicht einer Acrylathaftklebemasse,
deren Polymerkomponente aus einem oder mehreren Copolymeren gebildet ist, die jeweils auf die folgenden Monomere zurückzuführen sind

a) 5 bis 35 Gew.-% eines oder mehrerer hydroxygruppenhaltiger Monomere mit copolymerisierbarer Doppelbindung,
b) 0 bis 50 Gew.-% eines oder mehrerer Acrylat- und/oder Methacrylatmonomere mit jeweils zumindest einer Amidgruppe, Urethangruppe, Harnstoffgruppe, Carbonsäureanhydrideinheit und/oder Ethylenglykoleinheit,
c) 15 bis 95 Gew.-% eines Alkyl(meth)acrylates, wobei der Alkylrest eines bis 14 Kohlenstoffatome aufweist,

wobei der Acrylathaftklebemasse zumindest ein 2-(2H-Benzotriazol-2-yl)derivat (im Folgenden auch als "Additiv 1" bezeichnet) und als weitere Additive ein oder mehrere [3,5-Bis-(1,1-dimethylethyl-4-Hydroxyphenyl)methyl]alkylmalonat-Derivate (im Folgenden auch als "Additiv 2" bezeichnet) und ein oder mehrere diaromatisch funktionalisierte Ethandiamid-Derivate (im Folgenden auch als "Additiv 3" bezeichnet) beigemischt sind.

Bevorzugt ist das Additiv 1 in einer solchen Menge beigemischt, dass das Produkt aus Dicke der Acrylathaftklebemassenschicht und der Menge des zugemischten Additivs 1 je 100 g der Polymerkomponente, im Bereich von 75 bis 200 g*$\mu$m (1 g*$\mu$m = $10^{-9}$ kg*m) liegt.

Werden im Rahmen dieser Schrift Parameter in einem Bereich angegeben, der durch zwei Grenzen definiert

ist, so gelten die angegebenen Grenzwerte als zum Parameterbereich dazugehörig, sofern nichts Gegenteiliges angegeben wird.

Haftklebemassen (PSA; englisch: "pressure sensitive adhesives") sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück.

Haftklebemassen umfassen zumindest eines oder mehrere Polymere (im Rahmen dieser Schrift werden die Polymere gemeinsam als die "Polymerkomponente" der Haftklebemasse bezeichnet), bei denen es sich um Homopolymere und/oder Comonomere aus verschiedenen miteinander polymerisierbaren Monomeren handeln kann. Die Polymerkomponente kann an sich bereits haftklebrige Eigenschaften aufweisen, oder diese erst nach geeigneter Additivierung, beispielsweise durch Harze, bekommen.

Die Polymerkomponente kann grundsätzlich auf Grundlage von Polymeren unterschiedlicher chemischer Natur hergestellt werden. Die haftklebenden Eigenschaften können unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst werden.

Als Harze im Sinne dieser Schrift werden oligo- und polymere Verbindungen mit einem zahlenmittleren Molekulargewicht $M_n$ von nicht mehr als 10.000 g/mol angesehen; diese werden nicht der Polymerkomponente zugerechnet.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweist. Durch geeignete kohäsionssteigernde Maßnahmen, wie beispielsweise Vernetzungreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Das erfindungsgemäße Haftklebeband kann einseitig klebend ausgestaltet sein, üblicherweise wird es sich aber um ein doppelseitig klebend ausgerüstetes Klebeband handeln. Das Klebeband kann eine oder mehrere Trägerschichten aufweisen, wobei zumindest eine der außenliegenden klebemassenschichten, bevorzugt im Falle doppelseitig klebender trägerhaltiger Klebebänder beide außenliegenden Klebemassenschichten auf die vorstehend beschriebene Polymerkomponente beruhen und insbesondere identisch sind.

Insbesondere vorteilhaft sind doppelseitig klebende trägerlose Klebebänder, ganz besonders solche Klebebänder, die ausschließlich aus der wie erfindungsgemäß beschriebenen Schicht einer Acrylathaftklebemasse gebildet werden.

In bevorzugter Weise liegt das gewichtsmittlere Molekulargewicht $M_w$ des Polymers bzw. der Polymere der Polymerkomponente jeweils im Bereich von 200 000 $\leq M_w \leq$ 3 000 000 g/mol. Angaben zum gewichtsmittleren Molekulargewicht $M_w$ beziehen sich auf die Bestimmung durch Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 $\mu$, $10^3$ Å, ID 8,0 mm x 50 mm verwendet. Zur Auftrennung wurden die Säulen PSS-SDV, 5 $\mu$, $10^3$ sowie $10^5$ und $10^6$ mit jeweils ID 8,0 mm x 300 mm eingesetzt. Die Probenkonzentration betrug 4 g/l, die Durchflussmenge 1,0 ml pro Minute. Es wurde gegen PMMA Standards gemessen. ($\mu$ = $\mu$m; 1 Å = $10^{-10}$ m).

Wesentlich für das Absorbtionsverhalten der Acrylat-Haftklebemassenschicht ist die in einem Flächenabschnitt dieser Schicht tatsächlich vorhandene Menge an UV-Absorbern. Ist die Massenschicht dicker, so kann die Konzentration an Absorbern in der Klebemasse geringer sein, ist die Massenschicht dünn, so ist eine hohe Absorberkonzentration erforderlich, damit es zu einer entsprechenden Absorptionswirkung kommt. Es hat sich eine im Wesentlichen antiproportionale Beziehung zwischen Dicke und Menge an Additiven gezeigt, damit die Absorptionswirkung der Massenschicht wie gewünscht erzielt wird.

Das Produkt aus Dicke des Klebebandes und Menge des Absorbers (in Gew-Teilen) pro definierte Menge der Polymerkomponente (hier 100 Gew.-Teilen) ist daher charakteristisch für die Absorptionswirkung der entsprechenden Massenschicht und entspricht der auf 100 Gew.-Teilen (hier 100 g) normierten Menge an Additiv pro reziproker Dicke.

Dies bedeutet, dass eine 100 $\mu$m dickes Acrylathaftklebemassen-Schicht bevorzugt eine Menge von 0,75 bis 2 Gew.-Teilen an 2-(2H-Benzotriazol-2-yl)derivaten auf 100 Gew-Teile der Polymerkomponente aufweist, während eine

50 µm dicke Acrylathaftklebemassen-Schicht bevorzugt eine Menge von 1,5 bis 4 Gew.-Teilen an Additiven 1 auf 100 Gew-Teile der Polymerkomponente aufweisen sollte. Eine 200 µm dicke Acrylathaftklebemassen-Schicht weist demzufolge bevorzugt eine Menge von 0,375 bis 1 Gew.-Teil an Additiven 1 auf 100 Gew-Teile der Polymerkomponente auf.

Das Klebeband hat bevorzugt eine Dicke zwischen 10 und 500 µm, sehr bevorzugt zwischen 25 µm und 250 µm.

Der Acrylatklebemasse der Haftklebemassenschicht ist zudem zumindest ein [3,5-Bis-(1,1-dimethylethyl-4-Hydroxyphenyl)methyl]alkylmalonat-Derivat (im Folgenden auch als "Additiv 2" bezeichnet) beigemischt, und zwar bevorzugt in einer solchen Menge, dass das Produkt aus Dicke der Acrylathaftklebemassenschicht und der Menge des zugemischten Additivs 2, bezogen auf je 100 g der Polymerkomponente, im Bereich von 25 bis 200 g*µm liegt. Entsprechend würde eine 100 µm dicke Acrylathaftklebemassen-Schicht eine Menge von 0,25 bis 2 Gew.-Teilen Additiv 2 auf 100 Gew.-Teile Polymerkomponente beinhalten, und entsprechende Menge gemäß des antiproportionalen Verhältnisses zwischen bevorzugter Additivmenge und Schichtdicke für andere Klebebanddicken.

In bevorzugter Vorgehensweise ist Additiv 1 zu 75 bis 175 g*µm, sehr bevorzugt zu 75 bis 150 g*µm, jeweils bezogen auf 100 g der Polymerkomponente, vorhanden.

In einer anderen bevorzugten Vorgehensweise ist Additiv 2 zu 40 bis 150 g*µm, bezogen auf 100 g der Polymerkomponente, vorhanden.

Insbesondere vorteilhaft ist Additiv 1 zu 75 bis 175 g*µm, noch vorteilhafter zu 75 bis 150 g*µm, und gleichzeitig Additiv 2 zu 40 bis 150 g*µm, jeweils bezogen auf 100 g der Polymerkomponente, vorhanden.

In einer vorteilhaften Ausführungsform der Erfindung ist der Klebemasse das diaromatisch funktionalisierte Ethandiamid-Derivat ("Additiv 3") zusätzlich zu den Additiven 1 und 2 zu 25 bis 200 g*µm, bevorzugt zwischen 40 und 150 g*µm, bezogen auf 100 g der Polymerkomponente beigemischt.

Entsprechend würde eine 100 µm dicke Acrylathaftklebemassen-Schicht eine Menge von 0,25 bis 2 Gew.-Teilen, bevorzugt von 0,4 bis 1,5 Gew.-Teilen, Additiv 3 auf 100 Gew.-Teile Polymerkomponente beinhalten, und entsprechende Menge gemäß des antiproportionalen Verhältnisses zwischen bevorzugter Additivmenge und Schichtdicke für andere Klebebanddicken.

In einer weiter sehr vorteilhaften Ausführung der Erfindung ist der Acrylathaftklebemassen-Schicht zusätzlich zu den Additiven 1, 2 und 3 zumindest ein sterisch gehindertes Piperidinderivat (im Folgenden auch als "Additiv 4" bezeichnet) zugesetzt, und zwar in einer solchen Menge, dass das Produkt aus Dicke der Acrylathaftklebemassenschicht und der Menge des zugemischten Additivs 2, bezogen auf je 100 g der Polymerkomponente, im Bereich von 25 bis 200 g*µm, bevorzugt im Bereich von 40 bis 150 g*µm, liegt.

Entsprechend würde eine 100 µm dicke Acrylathaftklebemassen-Schicht eine Menge von 0,25 bis 2 Gew.-Teilen, bevorzugt von 0,4 bis 1,5 Gew.-Teilen, Additiv 4 auf 100 Gew.-Teile Polymerkomponente beinhalten, und entsprechende Menge gemäß des antiproportionalen Verhältnisses zwischen bevorzugter Additivmenge und Schichtdicke für andere Klebebanddicken.

Die erfindungsgemäße Klebemasse hat hervorragende UV-absorbierende Eigenschaften und ist zudem sehr alterungsbeständig. Dabei wurde festgestellt, dass das Additiv 1 vorrangig zu einer guten UV-A-Absorption führt, während die Additive 2 und 3 vorrangig UV-C-absorbierende Wirkung haben. Additiv 4 hat in erster Linie eine lichtstabilisierende Wirkung.

Überraschend hat sich gezeigt, dass die zugesetzten Additive weder die klebtechnischen Eigenschaften der additivierten Klebemasse wesentlich nachteilig verändern noch eine nachteilige Wirkung auf die ITO-Schicht besitzen, wenn die Klebemasse mit einer solchen in direktem Kontakt steht. Setzt man höhere Mengen ein als den in dieser Schrift angegebenen, so kann dies zu einer stärkeren Vergilbung der Klebemassen unter Alterungsbedingungen führen. Geringere Mengen erfüllen üblicherweise nicht mehr die Anforderungen an eine geringe Transmission bei 360 und 260 nm Wellenlänge.

Gegenstand der Erfindung ist weiterhin eine Klebemasse für die Herstellung einer Acrylat-Haftklebemassenschicht, wie sie vorstehend beschrieben wurde. Dies sind solche Acrylathaftklebemassen, deren Polymerkomponente aus einem oder mehreren Copolymeren gebildet ist, die jeweils auf die folgenden Monomere zurückzuführen sind

a) 5 bis 35 Gew.-% eines oder mehrerer hydroxygruppenhaltiger Monomere mit copolymerisierbarer Doppelbindung,
b) optional 0 bis 50 Gew.-% eines oder mehrerer Acrylat- und/oder Methacrylatmonomere mit jeweils zumindest einer Amidgruppe, Urethangruppe, Harnstoffgruppe, Carbonsäureanhydrideinheit und/oder Ethylenglykoleinheit,
c) 15 bis 95 Gew.-% eines Alkylacrylates, wobei der Alkylrest 1 bis 14 Kohlenstoffatome aufweist,

und wobei der Acrylathaftklebemasse zumindest ein 2-(2H-Benzotriazol-2-yl)derivat ("Additiv 1") und weiterhin zumindest ein diaromatisch funktionalisiertes Ethandiamid-Derivat ("Additiv 3") beigemischt ist, und weiterhin auch zumindest ein [3,5-Bis-(1,1-dimethylethyl-4-Hydroxyphenyl)methyl]alkylmalonat-Derivat ("Additiv 2"). In vorteilhafter Weise kann der Acrylathaftklebemasse weiterhin zumindest ein gehindertes Piperidinderivat ("Additiv 4") beigemischt sein. Auf alle Ausführungen zu der schichtförmige ausgeformten Klebemasse im Rahmen des erfindungsgemäßen Klebebandes wird entsprechend Bezug genommen, so dass diese auch für die Klebemasse als solche als offenbart gelten sollen.

Die in dieser Schrift erfindungsgemäß beschriebenen Haftklebemassen sind hervorragend geeignet, als optisch klare Klebemassen für die Verklebung im Bereich von Anzeigeeinheiten elektronischer Geräte eingesetzt zu werden, insbesondere als Klebemassenschicht in Klebebändern, ganz besonders als einschichtiges Klebeband. Ein hoher Transmissions-Wert bei 550 nm sorgt für die notwendige Lichtdurchlässigkeit in diesem Bereich. Geringe Transmissionswerte bei 260 nm und bei 360 nm belegen die Filterwirkung des schädlichen UV-Lichts. Der Lab-Farbraum ist ein Farbraum, der den Bereich der wahrnehmbaren Farben abdeckt (siehe DIN EN ISO 11664-4). Es wurde festgestellt, dass insbesondere der b*-Wert mit dem wahrnehmbaren Grad der Vergilbung korreliert. b*-Werte von mehr als 1 sind als deutliche Gelbfärbung wahrzunehmen und sind somit unerwünscht. Mit dem Begriff "Haze"(deutsch: Schleier") beschreibt man nach ASTM D1003-00 die Streuung von Licht durch einen Körper; angegeben als Prozentanteil des Lichtes, das mehr als in einem vorgegebenen Winkel abgelenkt wird.

Die erfindungsgemäßen Haftklebemassen zeichnen sich insbesondere bevorzugt dadurch aus, dass sie in Ausgestaltung als 100 µm dicker Film (also einschichtiges Klebeband) zumindest eines, bevorzugt alle der folgenden Kriterien erfüllen

- bei einer Wellenlänge von 550 nm eine Transmission von mindestens 89 % oder mehr,
- bei einer Wellenlänge von 360 nm eine Transmission von höchstens 0,2 % oder weniger,
- bei einer Wellenlänge von 260 nm eine Transmission von höchstens 0,1 oder weniger,
- und einen Haze von höchstens 5 % oder weniger, bevorzugt von höchstens 3 % oder weniger, sehr bevorzugt von höchstens 1 % oder weniger (ASTM D1003-00; Procedure A).

Die Polymerisation des Polyacrylates erfolgt insbesondere durch freie radikalische Polymerisation der eingesetzten Comonomere nach an sich bekannten Polymerisationsverfahren.

Zur Ermittlung der Glasübergangstemperatur von Copolymeren kann die Fox-Gleichung herangezogen werden (vgl. T.G. Fox, Bull. Am. Phys. Soc. 1 (1956) S. 123), die besagt, dass die reziproke Glasübergangstempertur des Copolymeren sich über die Gewichtsanteile der eingesetzten Comonomere und die Glasübergangstemperaturen der korrespondierenden Homopolymere der Comonomere berechnen lässt:

$$\frac{1}{T_G} = \frac{w_1}{T_{G,1}} + \frac{w_2}{T_{G,2}}$$

wobei $w_1$ und $w_2$ den Massenanteil des jeweiligen Monomers 1 bzw. 2 (Gew.-%) und $T_{G,1}$ und $T_{G.,2}$ die jeweilige Glasübergangstemperatur des Homopolymers aus den jeweiligen Monomeren 1 bzw. 2 in K repräsentieren.

Die Gleichung ist im Falle von mehr als zwei Comonomeren verallgemeinerbar auf

$$\frac{1}{T_G} = \sum_n \frac{w_n}{T_{G,n}}$$

In der allgemeinen Gleichung repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Die Werte für die Glasübergangstemperaturen der korrespondierenden Homopolymeren sind auch einschlägigen Nachschlagewerken entnehmbar.

Die Polymere der Polymerkomponente der Haftklebemassen umfassen zu 5 bis 35 Gew.-% eines oder mehrere hydroxygruppenhaltige Monomere mit copolymerisierbarer Doppelbindung. Geeignete Monomere sind beispielsweise 2-Hydroxyethylacryalt. 2-Hydroxypropylacrylat, 2-Hydroxybutylacrylat, 2-Hydroxyethylmethacrylat, 2-Hydroxypropylmethacrylat, 2-Hydroxybutylmethacrylat, 2-Hydroxyethylacrylamid, N-Hydroxypropylacrylamid. Neben Hydroxymonomeren mit acrylamidgruppen können auch Hydroxymonomere mit Ethylyenglykoleinheiten eingesetzt werden. Ein Beispiel hierfür ist Hydroxyterminiertes Propylenglykolacrylat.

Optional sind in den Polymeren der Polymerkomponente bis zu 50 Gew.-% eines oder mehrerer Acrylat- und/oder Methacrylatmonomere, die jeweils zumindest eine polare protische oder basische Gruppe tragen. Dies Gruppen können insbesondere Carbonsäuregruppen, Carbonsäureanhydridgruppen, Amidgruppen, Aminogruppen, Urethangruppen oder Harnstoffeinheiten sein. Sofern zwei oder mehr dieser funktionellen Gruppen vorhanden sind, können sie identisch sein oder unabhängig voneinander aus der genannten funktionellen Gruppen gewählt sein. Erfindungsgemäß sehr geeignete Beispiele hierfür sind Acrylsäure oder Methacrylsäuren, N-Vinylcaprolactam, N-Vinylpyrrolidon, Acrylamid, Methacrylamid, N-Alkylacrylamid, wie z.B. N-Methylacrylamid, N-Alkyl-methacrylamide, wie z.B. N-Methylmethacrylamid, N,N-Dialkylacrylamide, wie z.B. N,N-Dimethylacrylamid, Diacetonacrylamid, N,N-alkylmethacrylamide, wie

z.B. N, N-Dimethylmethacrylamid. Weitere Beispiele sind 4-Vinylpyridin, N-Vinylphthalimid, N-Vinylformamid. Weiterhin sehr geeignete Monomere im Sinne der Monomergruppe (b) sind Monomere mit (Poly)ethylenglykol-Segmenten, wobei zumindest zwei Ethylenglykoleinheiten im Monomer vorhanden sind. Die entsprechenden Monomere können insbesondere Hydroxy-terminiert und/oder methoxyliert sein.

Auf Grund von Verunreinigungen aus den Basismonomeren (insbesondere der Monomere aus der Monomergruppe (c)) können auch dann Spuren von Acrylsäure in der Masse enthalten sein, wenn an sich auf die Monomere der Monomergruppe (b) verzichtet werden soll.

Die Polymere der Polymerkomponente sind zudem zu 15 bis 95 Gew.-% auf ein oder mehrere Alkylacrylate zurückzuführen, wobei der Alkylrest insbesondere 1 bis 14 Kohlenstoffatome aufweist. Der Kohlenwasserstoffrest der Acrylmonomere kann verzweigt oder unverzweigt oder cyclisch, gesättigt oder ungesättigt, aliphatisch oder aromatisch, substituiert oder unsubstituiert sein.

Der Kohlenwasserstoffrest der Acrylmonomere kann insbesondere eine Alkyl- oder Alkenylgruppe sein mit einem bis 14 C-Atomen, insbesondere vorteilhaft sind Kohlenwasserstoffreste mit 4 bis 10 Kohlenstoffatomen. Vorteilhafte Beispiele für Acrylmonomere, die im Sinne der Monomergruppe (c) eingesetzt werden können, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere, wie z.B. Isobutylacrylat, 2-Ethylhexylacrylat, Isooctylacrylat.

Als vorteilhafte Monomere der Monomergruppe (c) lassen sich weiterhin beispielweise Methylacrylat, Methylmethacrylat, Ethylacrylat, n-Butylmethacrylat, n-Octylmethacrylat, 2-Ethylhexylmethacrylat, Isooctylmethacrylat einsetzen.

Weitere vorteilhafte Monomere der Monomergruppe (c) sind monofunktionelle Acrylate und/oder Methacrylate von überbrückten Cycloalkylalkoholen, die mindestens 6 C-Atomen aufweisen. Die Cycloalkylalkohole können auch substituiert sein, z.B. durch C-1-6-Alkylgruppen, Halogenatomen oder Cyanogruppen. Vorteilhafte Beispiele für derartige Monomere sind Cyclohexylmethacrylat, Isobornylacrylat, Isobornylmethacrylat und 3,5-Dimethyladamantylacrylat.

Ein Bestandteil der erfindungsgemäßen Haftklebemassen sind 2-(2H-Benzotriazol-2-yl)-Derivate (Additiv 1):

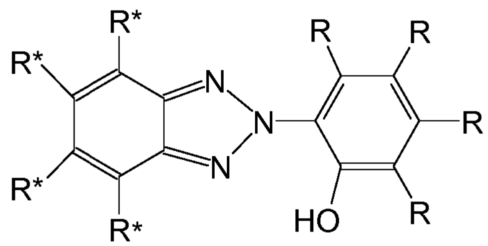

wobei die Reste R unabhängig voneinander und die Reste R* unabhängig voneinander und unabhängig von den Resten R jeweils Wasserstoff oder anorganische oder organische - aliphatische oder aromatische - Reste darstellen,
wobei bevorzugt die Reste R unabhängig voneinander Wasserstoff oder lineare oder verzweigte oder cyclische, aliphatische oder aromatische, Kohlenwasserstoffreste sind, insbesondere mit bis zu 14 Kohlenstoffatomen, wobei die Kohlenwasserstoffreste auch heterosubstituiert sein können, wie ein- oder mehrfach mit Stickstoff und/oder Schwefel und/oder Sauerstoff, und die Reste R* unabhängig voneinander Wasserstoff, Halogenidsubstituenten (insbesondere vorteilhaft Cl) oder aliphatische, lineare oder verzweigte oder cyclische Kohlenwasserstoffreste mit 1 bis 12 Kohlenstoffatomen darstellen.

Sofern an dieser Stelle oder an anderer Stelle im Rahmen dieser Schrift von cyclischen Kohlenwasserstoffresten die Rede ist, sind davon insbesondere solche Reste gemeint, die an irgendeiner Stelle - und nicht in direkter Nachbarschaft zu den aromatischen Ringen - einen cyclischen Baustein enthalten, so dass zwischen diesem cyclischen Baustein und dem aromatischen Ring eines oder mehrere Kohlenstoffatome und/oder Heteroatome angeordnet sind.

Mit diesen UV-Absorbern wird besonders bevorzugt die UV-Absorption im UV-A Bereich geregelt. Dabei sind bereits relativ geringe Mengen sind hinreichend, um eine möglichst hohe UV-A Absorption für die für optische Zwecke geeignete Klebemasse zu erreichen, ohne eine starke Gelbfärbung zu verursachen. So weisen diese Verbindungen bei 360 nm eine höhere Absorptionseffizienz als zum Beispiel üblicherweise eingesetzte Triazinverbindungen auf.

In einer bevorzugten Ausführung der Erfindung werden 2-(2H-Benzotriazol-2-yl)phenol-Derivate eingesetzt.

Besonders bevorzugt einzusetzende Additive 1, die einzeln oder auch in Kombination miteinander eingesetzt werden können, sind

2-(2H-benzotriazol-2-yl)-4,6-ditertpentylphenol,

die Ester verzweigter und linearer $C_7$-, $C_8$- und $C_9$-Alkohole mit 3-(2H-benzotriazol-2-yl)-5-(1,1-dimethylethyl)-4-hydroxybenzolpropansäure:

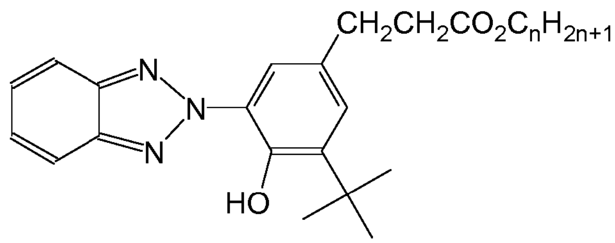

mit n = 7, 8 oder 9; Einsatz in der Regel als Mischung der vorgenannten Ester; kommerziell erhältlich auch in Beimischung von 5 % 1-Methoxy-2-propylacetat, 2-(2H-Benzotriazol-2-yl)-6-(1-methyl-1-phenylethyl)-4-(1,1,3,3-tetramethylbutyl)phenol, Octyl-3-[3-t-butyl-4-hydroxy-5-(5-chloro-2H-benzotriazol-2-yl)phenyl]propionate.

Die erfindungsgemäße Haftklebemasse enthält weiterhin sehr bevorzugt [[3,5-Bis(1,1-dimethylethyl)-4-Hydroxyphenyl]methyl]alkylmalonat-Derivate (Additiv 2):

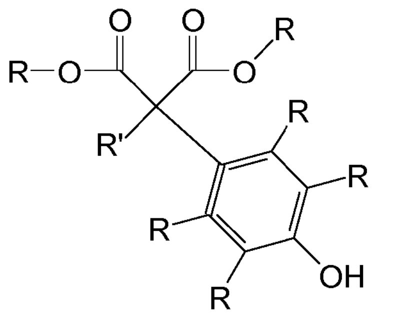

worin die Reste R und R' unabhängig von den übrigen Resten R und R' jeweils Wasserstoff oder anorganische oder organische - aliphatische oder aromatische - Reste darstellen; insbesondere Wasserstoff oder lineare oder verzweigte oder cylische, aliphatische oder aromatische, Kohlenwasserstoffreste repräsentieren, insbesondere mit bis zu 14 Kohlenstoffatomen, wobei die Kohlenwasserstoffreste auch heterosubstituiert sein können, wie ein- oder mehrfach mit Stickstoff und/oder Schwefel und/oder Sauerstoff.

In bevorzugter Weise werden [[3,5-Bis-[(1,1-dimethylethyl)-4-Hydroxyphenyl]-methyl]butylmalonate eingesetzt (R' = $C_4H_9$). In einer sehr bevorzugten Ausführungsform werden piperidinylsubstituierte 3,5-Bis-[1,1-dimethylethyl-4-Hydroxyphenyl)methyl]-butylmalonate eingesetzt. Ein sehr vorteilhaftes Beispiel hierfür ist z.B. Bis(1,2,2,6,6-pentamethyl-4-piperidinyl)-[[3,5-bis(1,1-dimethylethyl)-4-hydroxyphenyl]methyl]butyl-malonat.

Weiterhin können in einer bevorzugten Ausführungsform diaromatisch funktionalisierten Ethandiamid-Derivate (Additiv 3)

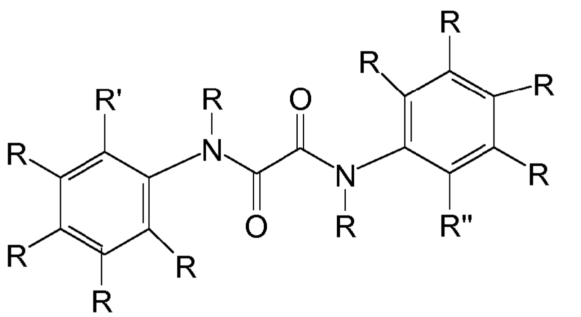

hinzugegeben werden, worin die Reste R und R' und R" jeweils unabhängig von den übrigen Resten R, R' und R" Wasserstoff oder lineare oder verzweigte oder cylische, aliphatische oder aromatische, Kohlenwasserstoffreste repräsentieren, insbesondere mit bis zu 14 Kohlenstoffatomen, wobei die Kohlenwasserstoffreste auch heterosubstituiert sein können, wie ein- oder mehrfach mit Stickstoff und/oder Schwefel und/oder Sauerstoff.

Diese haben eine hauptsächliche im UV-C Bereich absorbierende Wirkung und eine hohe Lichtstabilität. In einer bevorzugten Form werden als aromatische Gruppen Alkyl- oder Alkoxy-funktionalisierte Aromaten eingesetzt. In einer sehr bevorzugten Ausführungsform wird N-(2-ethoxyphenyl)-N'-(2-ethylphenyl)ethandiamid (R = H, R' = C2H5, R" = OC2H5 in obiger Formel) eingesetzt.

In einer weiteren sehr bevorzugten Ausführungsform können gehinderten Piperidinderivate (Additiv 4) zugesetzt, insbesondere vorteilhaft polymere Piperidinderivate der Formel

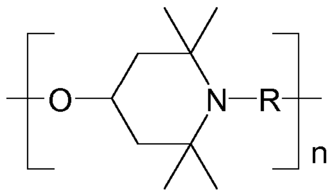

worin R eine lineare oder verzweigte Kohlenwasserstoffkette darstellt, die auch ein- oder mehrfach heterosubstituiert sein kann, insbesondere durch Schwefel und/oder Sauerstoff und/oder Stickstoff. Solche Verbindungen sind beispielweise auch unter der Bezeichnung "HALS" bekannt. Bei der wie in der Formel dargestellten 2,2,6,6-Dimethyl-Substituierung des Piperidinrings handelt es sich um eine beispielhafte vorteilhafte Ausgestaltung.

Besonders gut erfindungsgemäß einsetzbar sind Copolymere unter Verwendung von 4-Hydroxy-2,2,6,6-tetramethyl-1-piperidinethanol als Comonomer:

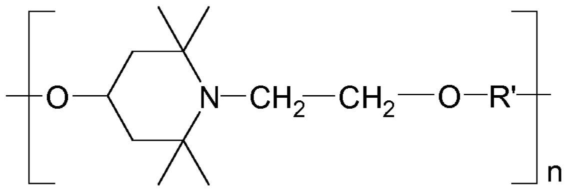

etwa das polymere Reaktionsprodukt aus 4-Hydroxy-2,2,6,6-tetramethyl-1-piperidinethanol sowie Butandisäuredimethylester, wobei R = $C(O)CH_2CH_2C(O)$ in der vorstehenden Formel.

Sofern die Kohäsion der Haftklebemasse nicht von vornherein hoch genug ist, um z.B. die Stanzbarkeit zu gewährleisten oder ein Abgleiten der optischen Bauteile bei senkrechtem Betrieb zu vermeiden, wird die Haftklebemasse erfindungsgemäß vernetzt. Dies wird üblicherweise der Fall sein. Eine hinreichende Kohäsion ist auch wichtig für einwandfreie Verklebungen im optischen Bereich.

Haftklebemassen sind viskoelastische Polymersysteme. Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G'), Verlustmodul (G") sowie der als Verlustfaktor tan $\delta$ (tan delta) bezeichnete Quotient G"/G' herangezogen werden. G' ist ein Maß für den elastischen Anteil, G" ein Maß für den viskosen Anteil eines Stoffes. Beide Größen sind abhängig von der Deformationsfrequenz und der Temperatur.

Der Verlustfaktor tan $\delta$ ist ein Maß für die Elastizität und das Fließvermögen der untersuchten Substanz.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation $\gamma$ gegenüber dem Einbringen der Schubspannung $\tau$ gemessen. Dieser zeitliche Versatz (Phasenverschiebung zwischen Schubspannungs- und Deformationsvektor) wird als Phasenwinkel $\delta$ bezeichnet.

Speichermodul G' $$G' = \tau/\gamma \cdot \cos(\delta)$$

Verlustmoduls G" $$G'' = \tau/\gamma \cdot \sin(\delta)$$

Verlustfaktor tan δ $$\tan\delta = G'/G''$$

Die Angaben der vorgenannten Parameter im Rahmen dieser Schrift beziehen sich auf die Messung mittels eines Rheometer in Platte-auf-Platte-Konfiguration, bezogen auf eine runde Probe mit einem Probendurchmesser von 8 mm und einer Probendicke von 1 mm. Messbedingungen: Temperatursweep von - 30 °C bis 130 °C, der tan delta soll im Bereich zwischen 0,05 und 1,0 liegen, bevorzugt zwischen 0,1 und 0,5, jeweils bestimmt bei 130 °C und 10 rad/s.

Die Vernetzung des Polyacrylates wird bevorzugt durch thermische Vernetzung und/oder chemische Vernetzung erfolgen. Um eine gute Verarbeitbarkeit zu erreichen, sollte die Vernetzung dann bis zu einem Vernetzungsgrad durchgeführt, der durch einen Verlustfaktor (tan δ-Wert) zwischen 0,1 und 1,0 gekennzeichnet ist (Prüfmethode Rheologie).

Die Vernetzung wird sehr bevorzugt unter Einsatz polyfunktioneller Vernetzersubstanzen (im folgenden als Vernetzer bezeichnet) durchgeführt, die der Haftklebemasse vor der Vernetzung beigemischt werden. Solcher Vernetzer können mit geeigneten reaktiven Zentren der Makromoleküle unter den jeweiligen Vernetzungsbedingungen reagieren, somit mittels ihre mindestens zwei funktionellen Gruppen Brücken zwischen den Makromolekülen ausbilden und zu einem Netzwerk beitragen.

In einer besonders zu bevorzugenden Ausführung werden die Polyacrylate thermisch vernetzt. Zur Erzielung des gewünschten viskoelastischen Bereiches können Isocyanatvernetzer, Epoxy-basierte Vernetzer, Melamin-basierte Vernetzer, Peroxidbasierte Vernetzer, Metallchelat-basierte Vernetzer, Metallsalz-basierte Vernetzer, Carbodiimid basierte Vernetzer, Oxazolin-basierte Vernetzer, Aziridin-basierte Vernetzer Amin-basierte Vernetzer oder Silan-basierte Vernetzer eingesetzt werden. Die Kombination verschiedener Vernetzer ist ebenfalls möglich.

Bei Verwendung von difunktionellen Vernetzern beträgt ihr Anteil in der Haftklebemasse zwischen 0,3 und 3 Gew.-Teile, besonders bevorzugt zwischen 0,5 und 2 Gew.-Teile Vernetzer auf 100 Gew.-Teile der Polymerkomponente. Bei Einsatz trifunktioneller Vernetzer wird ihr Anteil bevorzugt zu 0,02 bis 0,5 Gew.-Teile auf 100 Gew.-Teile der Polymerkomponente hinzugegeben, besonders bevorzugt mit 0,05 bis 0,2 Gew.-Teilen. Es können aber auch Vernetzer mit höherer Funktionalität eingesetzt werden. Weiterhin können mehrere Vernetzer eingesetzt werden, die bezüglich ihrer Funktionalität gleich oder unterschiedlich sein können (zum Beispiel Kombination difunktioneller und trifunktioneller Vernetzer). Die eingesetzten Mengen sollten dann vorteilhaft angepasst werden.

Der zu polymerisierenden Comonomermischung, dem in der Polymerisation befindlichen Polymerisat und/oder dem fertig polymerisierten Polyacrylat können - vorteilhaft vor der Vernetzungsreaktion - insbesondere zur Unterstützung der Einstellung der gewünschten Produkteigenschaften weitere Komponenten und/oder Additive zugesetzt werden, insbesondere solche Additive, die nicht in das Polymer eingebaut werden und/oder nicht an der Vernetzungsreaktion teilnehmen.

Auf die Anwesenheit von Klebharzen und Weichmachern kann bei der Haftklebemasse, die für das erfindungsgemäße Klebeband beziehungsweise für das erfindungsgemäß verwendete Klebeband eingesetzt wird, verzichtet werden, so dass eine hervorragende Ausführungsvariante des erfindungsgemäßen Klebebandes eine Haftklebemassenschicht aufweist, insbesondere durch eine Haftklebemassenschicht realisiert ist (einschichtiges, trägerloses Klebeband), bei der der Haftklebemasse keine Harze und/oder keine Weichmacher zugesetzt sind, insbesondere vorteilhaft weder Harze noch Weichmacher zugesetzt sind. Derartige Zusätze besitzen häufig nachteilige Auswirkungen bei der Anwendung für optische Verklebungen. Die gemäß des Standes der Technik als Klebharze für Acrylathaftklebemassen eingesetzten Harze sind üblicherweise polarer Natur, um eine Verträglichkeit mit der Polyacrylatmatrix zu erreichen. Dies führt meist zu dem Einsatz von aromatischen Klebharzen, die sich bei längerer Lagerung oder unter Lichteinwirkung gelblich verfärben.

Das wie oben dargestellt erhältliche und gegebenenfalls additivierte Polyacrylat wird zur Herstellung einer Haftklebemassenschicht ein- oder beidseitig auf einen Träger aufgetragen, wobei ein permanenter Träger verwendet werden kann, der im Klebebandaufbau auch in der Anwendung erhalten bleibt. Insbesondere vorteilhaft werden aber trägerlose, insbesondere einschichtige Klebebänder erzeugt, die in einer sehr hervorragenden Ausführungsform in der Anwendung aus der Haftklebemassenschicht allein bestehen (so genannte Transferklebebänder) und zur vorherigen Handhabung, Konfektionierung und Anbietung im Markt ein- oder beidseitig mit einem temporären Träger versehen sind, insbesondere zur Rolle gewickelt sind.

Zur Herstellung derartiger Transferklebebänder wird das wie oben dargestellt erhältliche Polyacrylat vorteilhaft auf einen temporären Träger (insbesondere antiadhäsive und/oder antiadhäsiv ausgestattete Materialien (so genannte Abdeckmaterialien, Trennmaterialien, Releasematerialien oder (Release-)Liner; wie beispielsweise silikonisierte Papiere, Folien oder dergleichen) in der gewünschten Schichtdicke beschichtet. Prinzipiell können hier alle für Polyacrylat-Haftklebemassen geeigneten Trennmaterialien eingesetzt werden. Besonders bevorzugt werden Release Liner mit einem PET Trägerkern eingesetzt.

Hergestellt werden können auch Klebebänder mit zwei (Haft-)Klebemassenschichten unterschiedlicher Art, von denen zumindest eine der Schichten eine wie im Rahmen dieser Schrift beschriebene (erfindungsgemäße) Haftklebemassenschicht ist. Die Haftklebemassenschichten können direkt aneinandergrenzen (Zwei-Schichten-Klebeband), zwischen den zwei Haftklebemassenschichten können optional auch eine oder mehrere weitere Schichten vorgesehen sein, wie beispielsweise Trägerschichten oder dergleichen (Mehrschichtenaufbau).

Die Vernetzung des Polyacrylates erfolgt bevorzugt in der Schicht auf dem Trägermaterial. Die Haftklebemasse wird bevorzugt so eingestellt, dass die haftklebrigen Eigenschaften für den Einsatz der Haftklebemasse für den beschriebenen Verwendungzweck geeeignet sind. Erfindungsgemäß bevorzugt geschieht dies durch Wahl des geeigneten Vernetzungsgrades des Polyacrylates. Das Polyacrylat wird vorliegend bis zu einem Vernetzungsgrad vernetzt, der die Realisierung der angegebenen Parameter bedingt. Hierdurch können insbesondere die Kohäsion und die Adhäsion der

Haftklebemasse sowie deren Fließverhalten geregelt werden.

Prinzipiell können erfindungsgemäße Klebebänder auch durch Vernetzung mittels UV-Bestrahlung erhalten werden, wobei diese Vernetzung alternativ oder zusätzlich zu anderen Vernetzungsmethoden durchgeführt werden kann. Diese Ausführungsform ist aber hier nicht zu bevorzugen, da durch die enthaltenen UV-Absorber die Vernetzungseffizienz für die UV-Vernetzung deutlich abgesenkt wird.

In einer sehr bevorzugten Vorgehensweise kann die Vernetzung des Polyacrylats thermisch bewirkt werden (also durch Zufuhr thermischer Energie).

Zur thermischen Vernetzung werden die erfindungsgemäßen Haftklebebänder bevorzugt durch einen Trocknungskanal geführt. Der Trocknungskanal erfüllt zwei Funktionen. Zum einen werden - für den Fall, dass die Acrylathaftklebemasse aus Lösung beschichtet wurde - die Lösungsmittel entfernt. Dies erfolgt in der Regel durch ein stufenweises Erwärmen, um Trocknungsblasen zu vermeiden. Zum anderen wird - wenn ein gewisser Trocknungsgrad erreicht ist - die Wärme genutzt, um die thermische Vernetzung zu intiieren. Der erforderliche Wärmeeintrag hängt vom Vernetzersystem ab. Weiterhin können -je nach Vernetzungssystem - Nachvernetzungsreaktionen eintreten. Diese sind z.B. typisch für die Isocyanatvernetzung.

Insbesondere für optische Anwendungen weist die Haftklebemasse mit einer Schichtdicke von 50 $\mu$m zwischen Glas eine Transparenz entsprechend einer Transmission (austretende Lichtintensität bezogen auf eingestrahlte Lichtintensität, in %) von mindestens 95 % (nach vorherigem Abzug der Reflexionsverluste an den Grenzflächenübergängen Luft/Klebemasse und Klebemasse/Luft) bzw. von mindestens 89 % (austretende Lichtintensität bezogen auf absolut eingestrahlte Lichtintensität, ohne Abzug der an den Grenzflächenübergängen Luft/Klebemasse und Klebemasse/Luft reflektierten Anteile von der eingestrahlten Lichtintensität) aufweist. Weiter vorteilhaft weist die Haftklebemasse eine Haze-Wert von höchstens 5 %, bevorzugt weniger 3 %, sehr bevorzugt weniger 1 % auf.

Weiterhin betrifft die Erfindung die Verwendung der erfindungsgemäßen Klebemassen und die Verwendung der erfindungsgemäßen Klebebänder zur Verklebung von Substraten auf elektrisch leitfähigen Filmen, insbesondere solchen Filmen in optischen, elektronischen oder optoelektronischen Geräten und/oder solchen Filmen für die Herstellung von berührungsempfindlichen Bildschirmen und/oder zur Erzeugung eines elektrischen Feldes.

Es ist dafür vorteilhaft, wenn zumindest eines der Substrate optisch transparent ist, insbesondere aus Glas oder aus Polycarbonat besteht. In besonders bevorzugter Ausführung der Erfindung ist der elektrisch leitfähige Film ein solcher mit nanoskaligen Silberdrähten auf der Oberfläche oder mit einer Indium-Zinnoxid-Schicht (ITO).

Das Klebeband kann direkt zu einer oder zwei Seiten eines optischen Elementes laminiert werden. Optische Elemente können z.B. Polarizer Filme oder Brightness Enhancement Filme oder 3D Filme sein. Weiterhin kann das optische klare Haftklebeband auch auf Displayeinheiten laminiert werden. So können z.B. auf diesem Wege auch Touch Panel Einheiten mit dem Display verklebt werden oder auch Polarizerfilme mit dem Display. Weiterhin wird das Klebeband sehr bevorzugt zur Herstellung der Touch Panel Einheiten eingesetzt. Hier gibt es ebenfalls verschiedene Kombinationen je nach Touch Panel Typ. So eignet sich das Haftklebeband für Glas/Glas Verklebungen oder Glas / Film Touch Panels oder auch Glas / Film /Film Touch Panels, wobei der Film immer ein ITO-Film mit zumindest einer ITO Schicht darstellt. Das ITO kann aber auch direkt auf dem Glas beschichtet sein. Das erfindungsgemäße Klebeband ist besonders bevorzugt zur Verklebung auf ITO Oberflächen geeignet.

Das erfindungsgemäße Klebeband eignet sich besonders gut für Permanentverklebungen, insbesondere also Verklebungen, bei denen die Klebeverbindung dauerhaft erhalten bleiben soll. Die Verklebungen können auch großflächig durchgeführt werden und auch mit hohen Temperaturen belastet werden. Höhere dauerhafte Temperaturbelastungen können entstehen durch äußere Einflüsse (Sonneneinstrahlung) oder durch im elektronischen Gerät produzierte Wärme. Diese steigt generell an, da die Prozessorleistung immer weiter ansteigt und den Komponenten durch schlankere Designs immer weniger Platz im Gehäuse zur Verfügung steht. Das erfindungsgemäße Klebeband zeigt nach - unter für die Touch Panel Industrie typischen Lagerungsbedingungen, wie 1 Monat 70°C oder 1000 h bei 85°C und 85% r.h.- einen b* Wert von kleiner 1.5, äußerst bevorzugt von kleiner 1. Höhere Werte würden üblicherweise als deutliche Gelbfärbung wahrgenommen werden und sind somit für optische Anwendungen nicht akzeptabel. Neben der Temperaturstabilität sowie der Feuchtwärmestabilität ist die Kompatibilität mit dem zu verklebenden ITO-Film wichtig sowie die Möglichkeit des erfindungsgemäßen Klebebandes, diesen ITO-Film zu schützen. Der ITO-Film zeigt nach Lagerung unter UV-Licht, wie z.B. unter den Bedingungen des Schnellalterungstests mittels UV-Licht (sogenannter "QUV-Test"; siehe Prüfmethode H), eine deutliche Tendenz zur Gelbfärbung als auch zum Anstieg des elektrischen Widerstandes. Diese Änderungen sind in der Anwendung problematisch, das im Bilddarstellenden Bereich des Displays verklebt wird. Eine Gelbtrübung ist somit unerwünscht. Zudem sind große Änderungen des elektrischen Widerstandes des ITO-Films unerwünscht, da dadurch die Empfindlichkeit des Touch Panels sich über einen längeren Zeitraum verändert. Die erfindungsgemäßen Beispiel sind dadurch gekennzeichnet, dass sich die elektrische Leitfähigkeit weniger 10 % nach Lagerung für 500 h unter den Bedingungen des Schnellalterungstests mittels UV-Licht ändert (Prüfmethode H). Weiterhin steigt der b* Wert nach Lagerung für 500 h unter den Bedingungen des Schnellalterungstests mittels UV-Licht (Prüfmethode H) für ein Laminat aus Glas, erfindungsgemäßer Klebemasse und ITO-Film von kleiner 100 %, bevorzugt kleiner 50 % an. Die erfindungsgemäßen Klebemassen können aber auch für alle anderen optischen Verklebungen eingesetzt

werden und sind nicht nur auf ITO-Filmen einsetzbar. So werden auch vermehrt alternative Formen von elektrisch leitfähigen Materialien eingesetzt, wie z.B. für große Displays Kupferbahnen oder neuere Technologien wie leitfähiges Silber oder leitfähige Polymere und Kohlenstoffe. Auch weitere optische Elemente lassen sich durch die erfindungsgemäßen Haftklebemassen schützen. Eine Möglichkeit sind z.B. OLED Materialien, die ebenfalls eine hohe UV-Sensibilität aufweisen können.

## Experimenteller Teil

### Eigenschaften der eingesetzten Rohstoffe:

| | |
|---|---|
| Desmodur® N75 | Aliphatisches Polyisocyanat (HDI-Biuret). 75 % in Butylacetat, hergestellt durch Bayer |
| Tinuvin® 928 | Benzotrialzolverbindung hergestellt durch die BASF, 2-(2H-benzotriazol-2-yl)-6-(1-methyl-1 phenylethyl)-4-(1,1,3,3-tetramethylbutyl)phenol |
| Tinuvin® 328 | Benzotriazolverbindung hergestellt durch die BASF, 2-(2H-benzotriazol-2-yl)-4,6-ditertpentylphenol |
| Tinuvin®400 | Hydroxyphenyltriazin hergestellt durch die BASF, 2-[4-[2-Hydroxy-3-tridecyloxypropyl]oxy]-2-hydroxyphenyl]-4,6-bis(2,4-dimethylphenyl)-1,3,5-triazine and 2-[4-[2-hydroxy-3-didecyloxypropyl] oxy]-2-hydroxyphenyl]-4,6-bis(2,4-dimethylphenyl)-1,3,5-triazine |
| Tinuvin®384 | Benzotriazol hergestellt durch die BASF 95% Benzenepropanoic acid, 3-(2H-benzotriazol-2-yl)-5-(1,1-dimethylethyl)-4-hydroxy-, C7-9-branched and linear alkyl esters 5% 1-methoxy-2-propyl acetate |
| Tinuvin®622 | Butanedioic säuredimethylester, Polymer mit 4-hydroxy-2,2,6,6-tetramethyl-1-piperidin ethanol, hergestellt durch die BASF |
| Tinuvin® 312 | N-(2-ethoxyphenyl)-N’-(2-ethylphenyl)-ethandiamid, hergestellt durch die BASF |
| Tinuvin® 144 | *Bis* (1,2,2,6,6-pentamethyl-4-piperidinyl)-[[3,5-bis(1,1-dimethylethyl)-4-hydroxyphenyl]methyl] butylmalonat, hergestellt durch die BASF |

**Prüfmethoden**:

A. Rheometermessungen

Die Messungen wurden mit einem Rheometer des Typs "RDA II" der Fa. Rheometrics Dynamic Systems in Platte-auf-Platte-Konfiguration durchgeführt. Vermessen wurde eine runde Probe mit einem Probendurchmesser von 8 mm und einer Probendicke von 1 mm.

Die Probe wurde durch Aufeinanderlaminieren von 20 Schichten der wie oben hergestellten Klebefolien erhalten, die hierzu von dem jeweiligen Trägermaterial befreit wurden, so dass eine trägerlose 1 mm dicke Klebefolie erhalten wurde, aus der die runde Probe ausgestanzt werden konnte.

Messbedingungen: Temperatursweep von -30 bis 130°C bei 10 rad/s.

B. Transmission

Die Bestimmung der Transmission in einem Bereich zwischen 200 und 800 nm erfolgt nach ASTM D1003. Vermessen wurde der Verbund aus optisch transparenter Haftklebemasse und Glasplatte. Zur Beurteilung der UV-Absorber Effizienz wichtig sind die Absorption bei 360 nm, in einem Bereich zwischen 250 und 360 nm, sowie bei 360 nm. Für optisch transparente Haftklebemassen sollte die Transparenz zwischen 400 und 800 nm größer 90 % liegen.

C. Haze

Die Bestimmung des Haze erfolgt nach ASTM D1003, Procedure A.

D. Test zur elektrischen Leitfähigkeit ITO

Die Haftklebemasse wird als einseitiges Haftklebeband auf einem ITO Film (Elecrysta® V270L-TFMP) der Firma Nitto Denko verklebt. Der ITO-Film hat die Dimension 46 mm x 60 mm. Die Verklebungsfläche zusätzlich für die

Silberleitpaste beträgt 8 mm x 2 mm. , Die elektrischen Messungen werden mit einem Multimeter Agilent U 1252A vorgenommen. Die Messung wird bei 23 °C und 50 % r.h. durchgeführt. Es wird der Oberflächenwiderstand nach DIN 53482 gemessen. Die Alterung wird analog Prüfmethode H durchgeführt.

Das Messergebnis wird als Oberflächenwiderstand R in Ω festgehalten. Es kann der prozentuale Anstieg oder Abfall durch Messung des Ausgangswertes sowie durch Messung nach Lagerung bestimmt werden.

E. Molekulargewichtsbestimmungen

Das gewichtsmittlere Molekulargewicht $M_w$ wurde mittels Gelpermeationschromatographie (GPC) bestimmt. Als Eluent wurde THF mit 0,1 Vol.-% Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflussmenge 1,0 ml pro Minute. Es wurde gegen PMMA Standards gemessen. (μ = μm; 1 Å = $10^{-10}$ m).

F. LAB Messung

Die LAB-Messung erfolgte nach DIN 5033-3.

| | |
|---|---|
| Lichtquelle / Lichtstandard: | D65 |
| Betrachterwinkel: | 10° |

Das transparente Muster wurde gegen eine weiße Referenzfliese gemessen. Die gemessenen Daten sind relativ als L*a*b* Werte gegen die weiße Referenzfliese aufgetragen und werden wie folgt berechnet $a^* = a^*_{exp} - a^*_{ref}$ und $b^* = b^*_{exp} - b^*_{ref}$ and $L^* = (100 \times L^*_{exp}) / L^*_{ref}$. Für die Anwendung ist insbesondere die Gelbfärbung b* relevant. Daher wird auf die Auftragung der anderen Werte verzichtet.

G. Alterung

Die Alterung erfolgte im freien Film auf den Release Linern. Die Muster wurden in einem Trockenschrank bei 70°C einen Monat gelagert. Parallel wurden in einem Feuchtwärmeschrank die Muster im freien Film auf den Release Linern für 1000 h bei 85°C und 85 % r.h. eingelagert. Nach der Alterung erfolgte in der Regel die LAB Messung nach Methode F.

H. Schnellalterungstest mittels UV-Licht

Die Alterung des ITO-Film wurde mittels des Schnellalterungstests mittels UV-Licht nach DIN EN ISO 4892-3 (sogenannter "QUV-Test") durchgeführt. Die Strahlung der UV-Lampe betrug bei 340 nm 0,76 W/m$^2$. Es wurde analog zur genannten DIN-EN-ISO-Norm in Zyklen für 8 h bei 60 °C bestrahlt sowie für 4 h bei 50 °C befeuchtet. Der Test lief 500 h. Es wurden der reine ITO-Film (Nitto Elecrysta® V270L-TFMP) sowie das Laminat aus 0,7 mm Quarzglas, 100 μm des erfindungsgemäßen einschichtigen Klebebandes mit UV-absorbierenden Eigenschaften und Nitto Elecrysta® V270L-TFMP bewertet. Zur Bewertung wurden nach Prüfmethode F LAB Messungen durchgeführt und der b* Wert bestimmt.

**Polymersationen des Polyacrylates**

Polyacrylat

Ein für radikalische Polymerisationen konventioneller 200 L-Reaktor wurde mit 10,5 kg 2-Hydroxyethylacrylat, 59,5 kg 2-Ethylhexylacrylat und 53,3 kg Ethylacetat/Toluol (42,6 kg /10,7 kg) befüllt. Nach 45minütigen Durchleiten von Stickstoffgas unter Rühren wurde der Reaktor auf 70 °C hochgeheizt und 30 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 30 g AIBN hinzugegeben. Nach 5 h und 10 h wurde mit jeweils 15 kg Ethylacetat/Toluol (90:10) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt. Die GPC-Analyse zeigte ein $M_w$ von 882 000 g/mol.

Vernetzung

Die Haftklebemasse wurde anschließend mit 0,2 Gewichtsanteilen Desmodur N75 der Bayer AG abgemischt, auf einen Feststoffgehalt mit 28 % durch Verdünnung mit Toluol eingestellt, und dann auf einen 50 μm dicken PET Release Liner der Firma Nippa ausgestrichen. Anschließend wird zunächst für 15 Minuten bei Raumtemperatur, dann für 15 Minuten bei 120°C im Trockenschrank getrocknet. Die Dicke nach der Beschichtung betrug 100 μm. Die Muster wurden - bevor Sie weiter vermessen und bewertet wurden - 7 Tage bei Raumtemperatur gelagert. Der tan δ liegt nach der Vernetzung bei ca. 0.2; gemessen mit 10 rad/s und 130 °C (siehe Prüfmethode A).

Additivierung mit UV-Absorbern / Herstellung der Beispiele u. Referenzbeispiele

Es wurde analog zu "Vernetzung" vorgegangen, wobei die Mengen an Vernetzer konstant gehalten wurden. Zusätzlich zu dem Vernetzer wurden ein oder mehrere UV-Additive hinzugesetzt und in dem Polymer ebenfalls unter Rühren gelöst. Anschließend wurde wiederum - analog zur "Vernetzung" mit 28 % Feststoffgehalt beschichtet. Dicke der Muster, Trocknung und Lagerung erfolgten unter identischen Bedingungen. Die eingesetzten UV-Absorber hatten keinen wesentlich Einfluß auf den Vernetzungsgrad. Der tan δ liegt bei allen Mustern bei ca. 0.2; gemessen mit 10 rad/s und 130 °C (siehe Prüfmethode A).

Übersicht der Beispiele

In der folgenden Tabelle sind die erfindungsgemäßen Beispiele sowie deren Zusammensetzung aufgelistet:

| | Benzotriazol [Gew.-% bezogen auf 100 % Polymer] | Malonat [Gew.-% bezogen auf 100 % Polymer] | Ethandiamid [Gew.-% bezogen auf 100 % Polymer] | Polymeres Piperidin [Gew.-% bezogen auf 100 % Polymer] |
|---|---|---|---|---|
| Beispiel 1 | 0,75 % Tinuvin 328® | 0,5 % Tinuvin® 144 | 1,0 % Tinuvin® 312 | 0,5 % Tinuvin® 622 |
| Beispiel 2[#] | | | | |
| Beispiel 3 | 1,0 % Tinuvin 328® | 0,5 % Tinuvin® 144 | 0,5 % Tinuvin 312 | - |
| Beispiel 4 | 1,0 % Tinuvin 328® | 0,25 % Tinuvin® 144 | 1,0 % Tinuvin 312 | 2 % Tinuvin® 622 |
| Beispiel 5 | 1,0 % Tinuvin 328® | 2 % Tinuvin® 144 | 1,0 % Tinuvin 312 | 0,25 % Tinuvin® 622 |
| Beispiel 6 | 2,0 % Tinuvin 328® | 0,5 % Tinuvin® 144 | 0,25 % Tinuvin® 312 | 0,5 % Tinuvin® 622 |
| Beispiel 7 | 1.0 % Tinuvin® 928 | 0,5 % Tinuvin® 144 | 1,0 % Tinuvin® 312 | 0,5 % Tinuvin® 622 |
| Referenzbeispiel 1 | - | - | - | - |
| Referenzbeispiel 2 | 0,5 % Tinuvin® 328 | - | - | - |
| Referenzbeispiel 3 | 1,0 % Tinuvin® 328 | - | - | - |
| Referenzbeispiel 4 | 2,0 % Tinuvin®328 | - | - | - |
| Referenzbeispiel 5 | 0,75 % Tinuvin®928 | - | - | - |
| Referenzbeispiel 6 | 1,0 % Tinuvin®384 | - | - | - |
| Referenzbeispiel 7 | 1,0 % Tinuvin®400* | - | - | - |
| Referenzbeispiel 8 | 2,0 % Tinuvin®400* | - | - | - |

(fortgesetzt)

| | Benzotriazol [Gew.-% bezogen auf 100 % Polymer] | Malonat [Gew.-% bezogen auf 100 % Polymer] | Ethandiamid [Gew.-% bezogen auf 100 % Polymer] | Polymeres Piperidin [Gew.-% bezogen auf 100 % Polymer] |
|---|---|---|---|---|
| Referenzbeispiel 9 | 3,0 % Tinuvin®400* | 0,5 % Tinuvin® 144 | | |
| Referenzbeispiel 10# | 1,0 % Tinuvin 328® | 1 % Tinuvin® 144 | - | - |
| *Triazinderivat und kein Benzotriazolderivat<br>#als erfindungsgemäßes Beispiel 2 gestrichen und als Referenzbeispiel 10 wiederaufgenommen | | | | |

Als erstes Basiskriterium wurden die optischen Messungen durchgeführt. Die Messungen wurden mit den Prüfmethoden B und C durchgeführt. Die gemessenen Daten sind in folgender Tabelle zusammengefasst:

| | Transmission bei 360 nm [%] | Transmission bei 260 nm [%] | Transmission bei 550 nm [%] | Haze [%] |
|---|---|---|---|---|
| Beispiel 1 | 0,16 % | 0,05 % | > 89 % | < 1 % |
| Beispiel 3 | 0,01 % | 0,08 % | > 89 % | < 1 % |
| Beispiel 4 | 0,01 % | 0,05 % | > 89 % | < 1 % |
| Beispiel 5 | 0,01 % | 0,01 % | > 89 % | < 1 % |
| Beispiel 6 | < 0,01 % | 0,05 % | > 89 % | < 1 % |
| Beispiel 7 | 0,01 % | 0,06 % | > 89 % | < 1 % |
| Referenzbeispiel 1 | 89 % | 71 % | > 89 % | < 1 % |
| Referenzbeispiel 2 | 1 % | 33 % | > 89 % | < 1 % |
| Referenzbeispiel 3 | 0,01 % | 18% | > 89 % | < 1 % |
| Referenzbeispiel 4 | < 0,01 % | 6,4 % | > 89 % | < 1 % |
| Referenzbeispiel 5 | 0,16 % | 27 % | > 89 % | < 1 % |
| Referenzbeispiel 6 | 0,11 % | 26 % | > 89 % | < 1 % |
| Referenzbeispiel 7 | 4,3 % | 0,5 % | > 89 % | < 1 % |
| Referenzbeispiel 8 | 0,27 % | < 0,01 % | > 89 % | < 1 % |
| Referenzbeispiel 9 | 0,03 % | < 0,01 % | > 89 % | < 1 % |
| Referenzbeispiel 10 | 0,01 % | 0,12 % | > 89 % | < 1 % |

Aus den Messungen ist zu ersehen, dass das Referenzbeispiel 1 zwar eine hohe Transmission und einen geringen Haze im sichtbaren Bereich aufweist - eine hohe Transmission von größer 89 % bei 550 nm sowie ein geringer Haze von kleiner 1 % konnte für alle Proben gemessen werden -, aber auch eine sehr hohe Transmission im UV-Bereich bei 260 und 360 nm. Solche Klebemassen bieten somit keinen Schutz vor UV-Strahlung. Das Referenzbeispiel 2 belegt,

dass mit Benzotriazolverbindungen bereits mit geringen Mengen eine geringe Transmission bei 360 nm erreicht werden kann (1 %), aber dass die Transmission bei 260 nm mit 33 % noch deutlich zu hoch ist. Bei Referenzbeispiel 3 wurde der Benzotriazolgehalt weiter angehoben (auf 1 Gew-%). Dadurch sinkt die Transmission im UV-Bereich bei 360 nm deutlich unter 1 ab. Die Transmission bei 260 nm beträgt aber immer noch 20 % und ist somit deutlich zu hoch. Erhöht man dagegen weiter den Benzotriazolgehalt auf 2 Gew.-% nimmt auch die Transmission weiter ab. So liegt hier die Transmission bei 360 nm bei kleiner 0,01 %, bei 260 nm bei nun 6,4 %.

Bei Referenzbeispiel 5 wurde das Benzotriazolderivat gewechselt. Hier wird nun Tinuvin® 928 mit 1 % zugesetzt. Das Bild ist relativ ähnlich zu Tinnuvin® 328. Auch hier wird bei 360 nm eine geringe Transmission und bei 260 nm mit 27 % eine relativ hohe Transmission gemessen.

Bei Referenzbeispiel 6 wurde ein weiteres Benzotriazolderivat eingesetzt. Hier wird nun Tinuvin® 384 mit 1 % zugesetzt. Das Bild ist relativ ähnlich zu Tinnuvin® 328. Auch hier wird bei 360 nm eine geringe Transmission und bei 260 nm mit 26 % eine relativ hohe Transmission gemessen.

Im Referenzbeispiel 7 wurde eine weitere Klasse UV-Absorber getestet. Hier werden Triazinverbindungen als UV-Absorber eingesetzt. Auch mit diesen Verbindungen ist die UV-Absorption bei 360 nm mit 4.3 % relativ hoch. Die Transmissionen bei 260 nm sind im Vergleich zu Benzotrialzolderivaten aber geringer. So wird bei 260 nm ein Wert von 0,49 % gemessen. Daher wurde im Referenzbeispiel 8 nochmals der Anteil Tinuvin® 400 weiter auf 2 % erhöht. Die Transmission liegt hier bei 360 nm immer noch relativ hoch bei 0,26 %. Bei 260 nm werden dagegen < 0,01 % gemessen. Eine weitere Verbesserung lässt sich durch eine nochmalige Erhöhung des Tinnuvin 400 Gehaltes auf 3 % (s. Referenzbeispiel 9) erreichen. Mit diesen Mengen werden bei 360 nm eine Transmission von 0,03 % und bei 260 nm eine Transmission von < 0,01 % gemessen. Von den Referenzbeispielen erfüllt somit das Referenzbeispiel 9 die Anforderungen an eine UV-absorbierende optisch klaren Klebemasse.

Alle erfindungsgemäßen Beispiele erfüllen - auch mit Kombination der unterschiedlichen Zusätze substituiertes Malonat, substituiertes Ethandiamid sowie polymeres Piperidin die Anforderungen an eine UV-absorbierende optisch klare Klebemasse.

Wird auf die Zusätze subsituiertes Ethandiamid sowie polymeres Piperidin verzichtet, dann kann die Transmission bei 260 nm oberhalb 0,1 % steigen (siehe Referenzbeispiel 10). Der absolute Wert ist aber mit 0,12 % immer noch sehr gut und liegt unterhalb 0,2 %. Beispiel 3 zeigt, dass bei Abwesenheit von polymerem Piperidin, aber bei Zusatz des Ethandiamid-Additivs ein Transmissionswert bei 260 nm von unterhalb 0,1 % erreicht werden kann.

Neben der Transmissionsmessung ist der Grad der Gelbfärbung ein weiterer entscheidender Faktor für das optische Verhalten. Gerade Klebemassen, die bei 360 nm eine geringe Transmission aufweisen, haben in der Regel eine Neigung zur Gelbfärbung. Daher wurde die Gelbfärbung aller Muster bestimmt. Weiterhin neigen aromatische Verbindung auch bei Lagerung unter hohen Temperaturen und Feuchtigkeiten ebenfalls zur Gelbfärbung. Daher wurde nach Prüfmethode G eine Alterung unter 2 unterschiedlichen Bedingungen durchgeführt. Die Ergebnisse sind in der folgenden Tabelle dargestellt.

| | b* (unbehandeltes Muster) | b* nach 1 Monat 70°C | b* nach 1000h 85°C, 85 % r.h. |
|---|---|---|---|
| Beispiel 1 | 0,44 | 0,69 | 0,92 |
| Beispiel 2 | 0,53 | 0,83 | 0,95 |
| Beispiel 3 | 0,61 | 0,76 | 0,88 |
| Beispiel 4 | 0,56 | 0,63 | 0,84 |
| Beispiel 5 | 0,64 | 0,71 | 0,93 |
| Beispiel 6 | 0,79 | 0,87 | 1,15 |
| Beispiel 7 | 0,74 | 0,72 | 0,94 |
| Referenzbeispiel 1 | 0,08 | 0,16 | 0,24 |
| Referenzbeispiel 2 | 0,31 | 0,52 | 0,69 |
| Referenzbeispiel 3 | 0,52 | 0,81 | 0,97 |
| Referenzbeispiel 4 | 0,71 | 0,93 | 1,22 |
| Referenzbeispiel 5 | 0,60 | 0,65 | 0,86 |
| Referenzbeispiel 6 | 0,37 | 0,81 | 0,91 |
| Referenzbeispiel 7 | 0,27 | 0,59 | 0,74 |

(fortgesetzt)

| | b* (unbehandeltes Muster) | b* nach 1 Monat 70°C | b* nach 1000h 85°C, 85 % r.h. |
|---|---|---|---|
| Referenzbeispiel 8 | 0,57 | 0,92 | 1,32 |
| Referenzbeispiel 9 | 0,59 | 1,24 | 1,67 |

Der Tabelle kann entnommen werden, dass bei frischen Mustern der Klebemassen noch keine Gelbfärbung auftritt. Alle b*-Werte liegen unterhalb 1. Weiterhin zeigt das Referenzbeispiel 1, dass die Polyacrylatklebemasse ohne aromatische Zusätze nur eine geringe Neigung zur Vergilbung hat. Durch die hohe Triazinadditivierung bei Referenzbeispiel 9 steigt der b* Wert nach Alterung deutlich an. Sowohl nach Lagerung bei 70 °C für einen Monat als auch nach Lagerung über einen Zeitraum von 1000 h bei 85 °C/85 % r.h. sind die Werte über 1 angestiegen. Im Lagerungstest bei 85 °C/85 % r.h. wurde sogar für Referenzbeispiel 9 ein b* Wert von oberhalb 1,5 gemessen. Die Benzotrialzolderivate (erfindungsgemäße Beispiele 1 - 7) zeigen durch den geringeren Anteil im Polymer eine etwas geringere Gelbfärbung. Für bis zu 2 % Gew-% Benzotrialzolderivat liegen in allen Fällen der b*-Wert bei 70 °C-Lagerung für einen Monat unterhalb von 1,0, für Lagerung bei 85 °C/85 % r.h. unterhalb 1,5. Durch Verringerung des Anteils auf 1 % lässt sich auch der b*-Wert für Lagerung bei 85 °C/85 % r.h. unterhalb 1,0 senken.

Die Versuche belegen, dass nur mittels Kombination aus zumindest einem Benzotriazol Derivates mit *Bis* (1,2,2,6,6-pentamethyl-4-piperidinyl)-[[3,5-bis(1,1-dimethylethyl)-4-hydroxyphenyl]methyl]butylmalonat zum einen eine geringe Transmission bei 260 und 360 nm von kleiner 0,2 % erreicht werden kann und zum Anderen auch nach Alterung die b*-Werte nur moderat ansteigen, so dass unter Hitzeeinwirkung immer noch keine signifikante Gelbfärbung erreicht wird.

Zur Bewertung der Effizienz der erfindungsgemäßen UV-absorbierenden optisch klaren Klebemassen wurden QUV-Alterungsversuche des ITO-Films nach Prüfmethode H durchgeführt. Die Alterungsmechanismen unterscheiden bei thermischer Lagerung, Feuchtwärmelagerung oder durch UV-Bestrahlung. Daher wurden diese Versuche nun auch zur Ergänzung mit UV-Licht durchgeführt. Hierfür wurden exemplarisch die erfindungsgemäßen Beispiele 1, 4 und 6 sowie das Referenzbeispiel 1 eingesetzt. Die Ergebnisse sind in der folgenden Tabelle zusammengestellt.

| | b* von ITO-Film* | b* von ITO-Film nach 500 h QUV* | b* von ITO-Film mit erfindungsgemäßer Klebeschicht (OCA) und Quarzglas | b* von ITO-Film mit erfindungsgemäßer Klebeschicht und Quarzglas nach 500 h QUV |
|---|---|---|---|---|
| Beispiel 1 | 1,21 | 5,60 | 1,66 | 2,31 |
| Beispiel 4 | 1,21 | 5,60 | 1,72 | 2,36 |
| Beispiel 6 | 1,21 | 5,60 | 1,94 | 2,49 |
| Referenzbeispiel 1 | 1,21 | 5,60 | 1,54 | 4,22 |
| *gleicher Ausgangswert, da kein Kontakt zu OCA. | | | | |

Die Ergebnisse belegen, dass durch den Einsatz der erfindungsgemäßen UV-absorbierenden optisch klaren Klebemassen eine deutliche Reduzierung der Gelbfärbung unter UV-Alterung erzielt werden kann. So steigt zwar gegenüber dem Referenzbeispiel 1 der b*-Wert des Laminates leicht an. Nach der Alterung liegen aber die b*-Werte deutlich unterhalb des Referenzbeispiels als auch deutlich unterhalb des reinen ITO-Films nach UV-Alterung. So zeigt Beispiel 1 einen prozentualen Anstieg des Gelbwertes b* von 39 %, Beispiel 4 von 37 %, Beispiel 6 von 28 %, und Referenzbeispiel 1 von 174%

Um nun den Einfluss der erfindungsgemäßen UV-absorbierenden optisch klaren Klebemassen auf den ITO-Film und dessen Funktion als elektrisch leitfähige Schicht zu untersuchen, wurden nach den QUV-Lagerungstests auch die elektrischen Leitfähigkeiten bestimmt. Die Werte sind in der folgenden Tabelle dargestellt (siehe Testmethode D).

| | Widerstand R des ITO-Films in Ω (*) | Widerstand R des ITO-Films nach 500 h QUV in Ω (*) | Widerstand R des ITO-Films mit aufgebrachter erfindungsgemäßer Klebeschicht in Ω | Widerstand R des ITO-Films aufgebrachter erfindungsgemäßer Klebeschicht nach 500 h QUV in Ω |
|---|---|---|---|---|
| Beispiel 1 | 748 | 1820 | 444 | 428 |
| Beispiel 4 | 748 | 1820 | 441 | 429 |
| Beispiel 6 | 748 | 1820 | 458 | 435 |
| Referenzbeispiel 1 | 748 | 1820 | 464 | 402 |
| (*) gleicher Ausgangswert, da kein Kontakt zu erfindungsgemäßer Klebeschicht | | | | |

Der ITO-Film wurde jeweils zuvor getempert für 30 min. bei 140 °C.

Der Tabelle kann entnommen werden, dass der reine ITO-Film relativ stark ohne aufgebrachte erfindungsgemäße Klebeschicht altert. Der Widerstand des reinen Films steigt von 748 Ω auf 1820 Ω an. Durch die Herstellung eines Verbundes aus Glas, erfindungsgemäßer Klebeschicht und ITO-Film verringert sich das Alterungsverhalten. Für das Referenzbeispiel 1 sinkt der Widerstand deutlich ab. Für die erfindungsgemäßen Beispiele 1, 4 und 6 bleibt auch nach QUV-Lagerung die elektrische Leitfähigkeit relativ konstant und liegt unter 10 % vom ursprünglichen Wert. Die Abweichung für Beispiel 1 liegt bei - 3,6 %, für Beispiel 4 bei - 2,7 %, für Beispiel 3 bei - 5,0 %. Das Referenzbeispiel 1 zeigt dagegen eine Abweichung von -13 %. Die erfindungsgemäßen Beispiele haben somit nicht nur einen positiven Einfluss auf die Gelbfärbung, sondern auch eine höhere Konstanz bei der elektrischen Leitfähigkeit.

## Patentansprüche

1. Klebeband, umfassend zumindest eine Schicht einer Acrylathaftklebemasse umfassend eine Polymerkomponente und zumindest ein Additiv,
wobei die Polymerkomponente aus einem oder mehreren Copolymeren gebildet ist, die jeweils auf die folgenden Monomere zurückzuführen sind

   a) 5 bis 35 Gew.-% eines oder mehrerer hydroxygruppenhaltiger Monomere mit copolymerisierbarer Doppelbindung,
   b) 0 bis 50 Gew.-% eines oder mehrerer Acrylat- und/oder Methacrylatmonomere mit jeweils zumindest einer Amidgruppe, Urethangruppe, Harnstoffgruppe, Carbonsäureanhydrideinheit und/oder Ethylenglykoleinheit,
   c) 15 bis 95 Gew.-% eines Alkyl(meth)acrylates, wobei der Alkylrest 1 bis 14 Kohlenstoffatome aufweist,

   wobei
der Acrylathaftklebemasse als Additiv ein oder mehrere 2-(2H-Benzotriazol-2-yl)derivate beigemischt sind,
**dadurch gekennzeichnet, dass**
als weitere Additive ein oder mehrere [[3,5-Bis-(1,1-dimethyl-4-hydroxyphenyl)methyl]alkylmalonat-Derivate und ein oder mehrere diaromatisch funktionalisierte Ethandiamid-Derivate beigemischt sind.

2. Klebeband nach Anspruch 1, **dadurch gekennzeichnet, dass**
das eine bzw. die mehreren 2-(2H-Benzotriazol-2-yl)derivate in einer Menge in der Acrylathaftklebemasse zugegen sind, dass das Produkt aus Dicke der Acrylathaftklebemassenschicht und der Menge der enthaltenen 2-(2H-Benzotriazol-2-yl)derivate in Summe im Bereich von 75 bis 200 g*µm je 100 g der Polymerkomponente liegt, insbesondere im Bereich 75 bis 175 g*µm je 100 g der Polymerkomponente.

3. Klebeband nach einem der vorangehenden Ansprüche, **dadurch gekennzeichnet, dass**
als 2-(2H-Benzotriazol-2-yl)derivat 2-(2H-Benzotriazol-2-yl)phenol-Derivate eingesetzt, werden,
insbesondere 2-(2H-benzotriazol-2-yl)-4,6-ditertpentylphenol und/oder die Ester verzweigter und linearer $C_7$-, $C_8$- und $C_9$-Alkohole mit 3-(2H-benzotriazol-2-yl)-5-(1,1-dimethylethyl)-4-hydroxy-benzolpropansäure und/oder 2-(2H-Benzotriazol-2-yl)-6-(1-methyl-1-phenylethyl)-4-(1,1,3,3-tetramethylbutyl)phenol und/oder Octyl-3-[3-t-butyl-4-hydroxy-5-(5-chloro-2H-benzotriazol-2-yl)phenyl]-propionate.

4. Klebeband nach einem der vorangehenden Ansprüche, **dadurch gekennzeichnet, dass** das eine bzw. die mehreren [[3,5-Bis-(1,1-dimethyl-4-hydroxyphenyl)methyl]alkylmalonat-Derivate in einer Menge in der Acrylathaftklebemasse zugegen sind, dass das Produkt aus Dicke der Acrylathaftklebemassenschicht und der Menge der enthaltenen [[3,5-Bis-(1,1-dimethyl-4-hydroxyphenyl)methyl]alkylmalonat-Derivate in Summe im Bereich von 25 bis 200 g*μm je 100 g der Polymerkomponente liegt, insbesondere im Bereich von 40 bis 150 g*μm je 100 g der Polymerkomponente.

5. Klebeband nach einem der vorangehenden Ansprüche, **dadurch gekennzeichnet, dass** als [[3,5-Bis-(1,1-dimethyl-4-hydroxyphenyl)methyl]alkylmalonat-Derivate [[3,5-Bis-[(1,1-dimethylethyl)-4-Hydroxyphenyl]-methyl]butylmalonate eingesetzt werden, bevorzugt piperidinylsubstituierte 3,5-Bis-[1,1-dimethylethyl-4-Hydroxyphenyl)methyl]-butylmalonate, sehr bevorzugt *Bis*(1,2,2,6,6-pentamethyl-4-piperidinyl)-[[3,5-bis(1,1-dimethylethyl)-4-hydroxyphenyl]methyl]butyl-malonat.

6. Klebeband nach einem der vorangehenden Ansprüche, **dadurch gekennzeichnet, dass** das eine bzw. die mehreren diaromatisch funktionalisierten Ethandiamid-Derivate in einer Menge in der Acrylathaftklebemasse zugegen sind, dass das Produkt aus Dicke der Acrylathaftklebemassenschicht und der Menge der enthaltenen diaromatisch funktionalisierten Ethandiamid-Derivate in Summe im Bereich von 25 bis 200 g*μm je 100 g der Polymerkomponente liegt, insbesondere im Bereich von 40 bis 150 g*μm je 100 g der Polymerkomponente.

7. Klebeband nach einem der einem der vorangehenden Ansprüche, **dadurch gekennzeichnet, dass** als diaromatisch funktionalisierten Ethandiamid-Derivat N-(2-ethoxyphenyl)-N'-(2-ethylphenyl)ethandiamid eingesetzt wird.

8. Klebeband nach einem der vorangehenden Ansprüche, **dadurch gekennzeichnet, dass** als weiteres Additiv ein oder mehrere gehinderte Piperidin-Derivate beigemischt sind.

9. Klebeband nach Anspruch 8, **dadurch gekennzeichnet, dass** das eine bzw. die mehreren gehinderten Piperidin-Derivate in einer Menge in der Acrylathaftklebemasse zugegen sind, dass das Produkt aus Dicke der Acrylathaftklebemassenschicht und der Menge der enthaltenen diaromatisch Piperidin-Derivate in Summe im Bereich von 25 bis 200 g*μm je 100 g der Polymerkomponente liegt, insbesondere im Bereich von 40 bis 150 g*μm je 100 g der Polymerkomponente.

10. Klebeband nach einem der Ansprüche 8 oder 9, **dadurch gekennzeichnet, dass** als gehinderte Piperidin-Derivat das polymere Reaktionsprodukt aus 4-Hydroxy-2,2,6,6-tetramethyl-1-piperidinethanol sowie Butandisäuredimethylester eingesetzt wird.

11. Klebeband nach einem der vorangehenden Ansprüche, **dadurch gekennzeichnet, dass** das eine bzw. die mehreren Copolymere der Polymerkomponente jeweils ein gewichtsmittleres Molekulargewicht Mw im Bereich von 200 000 g/mol bis 3 000 000 g/mol aufweisen, gemessen mittels Gelpermeationschromatographie gemäß Angaben in der Beschreibung.

12. Klebeband nach einem der vorangehenden Ansprüche, **dadurch gekennzeichnet, dass** die Acrylathaftklebemasse klebharzfrei vorliegt.

13. Klebeband nach einem der vorangehenden Ansprüche, **gekennzeichnet durch** eine Dicke der Acrylathaftklebemasenschicht im Bereich von 10 bis 500 μm, bevorzugt im Bereich von 25 bis 250 μm.

14. Klebeband nach einem der vorangehenden Ansprüche, **dadurch gekennzeichnet, dass** es als einschichtiges doppelseitig klebendes Klebeband ausgebildet ist, bestehend aus der Acrylathaftklebemassenschicht.

15. Klebeband nach Anspruch 14, **dadurch gekennzeichnet, dass** die Acrylathaftklebemassenschicht ein- oder beidseitig mit einem temporären Trägermaterial, insbesondere einem Releasematerial, eingedeckt ist.

16. Klebemasse, insbesondere Haftklebemasse, umfassend eine Polymerkomponente und zumindest ein Additiv, wobei die Polymerkomponente aus einem oder mehreren Copolymeren gebildet ist, die jeweils auf die folgenden Monomere zurückzuführen sind

a) 5 bis 35 Gew.-% eines oder mehrerer hydroxygruppenhaltiger Monomere mit copolymerisierbarer Doppelbindung,
b) 0 bis 50 Gew.-% eines oder mehrerer Acrylat- und/oder Methacrylatmonomere mit jeweils zumindest einer Amidgruppe, Urethangruppe, Harnstoffgruppe, Carbonsäureanhydrideinheit und/oder Ethylenglykoleinheit,
c) 15 bis 95 Gew.-% eines Alkyl(meth)acrylates, wobei der Alkylrest 1 bis 14 Kohlenstoffatome aufweist,

wobei
der Acrylathaftklebemasse als Additiv ein oder mehrere 2-(2H-Benzotriazol-2-yl)derivate beigemischt sind,
**dadurch gekennzeichnet, dass**
als weitere Additive ein oder mehrere [[3,5-Bis-(1,1-dimethyl-4-hydroxyphenyl)methyl]alkylmalonat-Derivate ein oder mehrere diaromatisch funktionalisierte Ethandiamid-Derivate beigemischt.

**17.** Verwendung einer Klebemasse nach Anspruch 16 oder eines Klebebandes nach einem der Ansprüche 1 bis 15 zur Verklebung von Substraten auf elektrisch leitfähigen Filmen.

## Claims

**1.** Adhesive tape comprising at least one layer of a pressure-sensitive acrylate adhesive comprising a polymer component and at least one additive,
the polymer component being formed of one or more copolymers assignable in each case to the following monomers:

a) 5 to 35 wt% of one or more hydroxyl-containing monomers with copolymerizable double bond,
b) 0 to 50 wt% of one or more acrylate and/or methacrylate monomers with in each case at least one amide group, urethane group, urea group, carboxylic anhydride unit and/or ethylene glycol unit,
c) 15 to 95 wt% of an alkyl (meth)acrylate, the alkyl radical having 1 to 14 carbon atoms,

where
the pressure-sensitive acrylate adhesive has been admixed as additive with one or plural 2-(2H-benzotriazol-2-yl) derivatives,
**characterized in that**
as further additives one or plural [[3,5-bis(1,1-dimethyl-4-hydroxyphenyl)methyl]alkylmalonate derivatives and one or plural diaromatically functionalized ethanediamide derivatives have been admixed.

**2.** Adhesive tape according to Claim 1, **characterized in that**
the one or the plurality of 2-(2H-benzotriazol-2-yl) derivatives is present in the pressure-sensitive acrylate adhesive in an amount such that the product of the thickness of the layer of pressure-sensitive acrylate adhesive and the amount of the 2-(2H-benzotriazol-2-yl) derivatives present is in total in the range from 75 to 200 g*μm per 100 g of the polymer component, more particularly in the range of 75 to 175 g*μm per 100 g of the polymer component.

**3.** Adhesive tape according to either of the preceding claims, **characterized in that**
2-(2H-benzotriazol-2-yl)phenol derivatives are used as 2-(2H-benzotriazol-2-yl) derivative,
more particularly 2-(2H-benzotriazol-2-yl)-4,6-di-tert-pentylphenol and/or the esters of branched and linear $C_7$, $C_8$ and $C_9$ alcohols with 3-(2H-benzotriazol-2-yl)-5-(1,1-dimethylethyl)-4-hydroxybenzenepropanoic acid and/or 2-(2H-benzotriazol-2-yl)-6-(1-methyl-1-phenylethyl)-4-(1,1,3,3-tetramethylbutyl)phenol and/or octyl 3-[3-tert-butyl-4-hydroxy-5-(5-chloro-2H-benzotriazol-2-yl)phenyl]propionate.

**4.** Adhesive tape according to any of the preceding claims,
**characterized in that**
the one or the plurality of [[3,5-bis(1,1-dimethyl-4-hydroxyphenyl)-methyl]alkylmalonate derivatives is present in the pressure-sensitive acrylate adhesive in an amount such that the product of the thickness of the layer of pressure-sensitive acrylate adhesive and the amount of the [[3,5-bis(1,1-dimethyl-4-hydroxyphenyl)methyl]alkylmalonate derivatives present is in total in the range from 25 to 200 g*μm per 100 g of the polymer component, more particularly in the range from 40 to 150 g*μm per 100 g of the polymer component.

**5.** Adhesive tape according to any of the preceding claims, **characterized in that** [[3,5-bis[(1,1-dimethylethyl)-4-hydroxyphenyl]methyl]butylmalonates are used as [[3,5-bis(1,1-dimethyl)-4-hydroxyphenyl)methyl]alkylmalonate derivatives, preferably piperidyl-substituted 3,5-bis[1,1-dimethylethyl-4-hydroxyphenyl)-methyl]butylmalonates, very

preferably *bis*(1,2,2,6,6-pentamethyl-4-piperidyl) [[3,5-bis(1,1-dimethylethyl)-4-hydroxyphenyl]methyl]butylmalonate.

6. Adhesive tape according to any of the preceding claims, **characterized in that** the one or the plurality of diaromatically functionalized ethanediamide derivatives is present in the pressure-sensitive acrylate adhesive in an amount such that the product of the thickness of the layer of pressure-sensitive acrylate adhesive and the amount of the diaromatically functionalized ethanediamide derivatives present is in total in the range from 25 to 200 g*μm per 100 g of the polymer component, more particularly in the range from 40 to 150 g*μm per 100 g of the polymer component.

7. Adhesive tape according to any of the any of the preceding claims, **characterized in that** N-(2-ethoxyphenyl)-N'-(2-ethylphenyl)ethanediamide is used as diaromatically functionalized ethanediamide derivative.

8. Adhesive tape according to any of the preceding claims, **characterized in that** as further additive one or plural hindered piperidine derivatives have been admixed.

9. Adhesive tape according to Claim 8, **characterized in that** the one or the plurality of hindered piperidine derivatives is present in the pressure-sensitive acrylate adhesive in an amount such that the product of the thickness of the layer of pressure-sensitive acrylate adhesive and the amount of the diaromatically piperidine derivatives present is in total in the range from 25 to 200 g*μm per 100 g of the polymer component, more particularly in the range from 40 to 150 g*μm per 100 g of the polymer component.

10. Adhesive tape according to either of Claims 8 and 9, **characterized in that** as hindered piperidine derivative the polymeric reaction product of 4-hydroxy-2,2,6,6-tetramethyl-1-piperidineethanol and of dimethyl butanedioate is used.

11. Adhesive tape according to any of the preceding claims, **characterized in that** the one or the plurality of copolymers of the polymer component each have a weight-average molecular weight $M_w$ in the range from 200 000 g/mol to 3 000 000 g/mol, measured by means of gel permeation chromatography as specified in the description.

12. Adhesive tape according to any of the preceding claims, **characterized in that** the pressure-sensitive acrylate adhesive is in a form free from tackifier resin.

13. Adhesive tape according to any of the preceding claims, **characterized by** a thickness of the layer of pressure-sensitive acrylate adhesive in the range from 10 to 500 μm, preferably in the range from 25 to 250 μm.

14. Adhesive tape according to any of the preceding claims, **characterized in that** it takes the form of a single-layer, double-sidedly bonding adhesive tape, consisting of the layer of pressure-sensitive acrylate adhesive.

15. Adhesive tape according to Claim 14, **characterized in that** the layer of pressure-sensitive acrylate adhesive is lined on one or both sides with a temporary carrier material, more particularly a release material.

16. Adhesive, more particularly pressure-sensitive adhesive, comprising a polymer component and at least one additive, the polymer component being formed of one or more copolymers assignable in each case to the following monomers:

a) 5 to 35 wt% of one or more hydroxyl-containing monomers with copolymerizable double bond,
b) 0 to 50 wt% of one or more acrylate and/or methacrylate monomers with in each case at least one amide group, urethane group, urea group, carboxylic anhydride unit and/or ethylene glycol unit,
c) 15 to 95 wt% of an alkyl (meth)acrylate, the alkyl radical having 1 to 14 carbon atoms,

where the pressure-sensitive acrylate adhesive has been admixed as additive with one or plural 2-(2H-benzotriazol-2-yl) derivatives,
**characterized in that**
as further additives one or plural [[3,5-bis(1,1-dimethyl-4-hydroxyphenyl)methyl]alkylmalonate derivatives one or

plural diaromatically functionalized ethanediamide derivatives admixed.

17. Use of an adhesive according to Claim 16 or of an adhesive tape according to any of Claims 1 to 15 for bonding substrates to electrically conductive films.

## Revendications

1. Ruban adhésif, comprenant au moins une couche d'une masse autoadhésive d'acrylate comprenant un composant de type polymère et au moins un additif,
le composant de type polymère étant formé à partir d'un ou plusieurs copolymères, qui sont issus à chaque fois des monomères suivants

    a) 5 à 35 % en poids d'un ou plusieurs monomères contenant un groupe hydroxy comportant une double liaison copolymérisable,
    b) 0 à 50 % en poids d'un ou plusieurs monomères de type acrylate et/ou méthacrylate comportant à chaque fois au moins un groupe amide, un groupe uréthane, un groupe urée, un motif de type anhydride d'acide carboxylique et/ou un motif de type éthylèneglycol,
    c) 15 à 95 % en poids d'un (méth)acrylate d'alkyle, le radical alkyle présentant 1 à 14 atomes de carbone,

    un ou plusieurs dérivés de type 2-(2H-benzotriazol-2-yle) étant mélangés en tant qu'additif à la masse autoadhésive d'acrylate,
    **caractérisé en ce qu'**un ou plusieurs dérivés de type malonate de [3,5-bis-(1,1-diméthyl-4-hydroxyphényl)méthyl]alkyle et un ou plusieurs dérivés de type éthanediamide fonctionnalisé de manière diaromatique sont mélangés en tant qu'additifs supplémentaires.

2. Ruban adhésif selon la revendication 1, **caractérisé en ce qu'**un ou les dérivés de type 2-(2H-benzotriazol-2-yle) sont présents dans la masse autoadhésive d'acrylate en une quantité telle que le produit de l'épaisseur de la couche de masse autoadhésive d'acrylate et de la quantité des dérivés de type 2-(2H-benzotriazol-2-yle) contenus se situe au total dans la plage de 75 à 200 g*μm par 100 g du composant de type polymère, en particulier dans la plage de 75 à 175 g*μm par 100 g du composant de type polymère.

3. Ruban adhésif selon l'une quelconque des revendications précédentes, **caractérisé en ce qu'**en tant que dérivé de type 2-(2H-benzotriazol-2-yle), des dérivés de type 2-(2H-benzotriazol-2-yl)phénol sont utilisés,
en particulier le 2-(2H-benzotriazol-2-yl)-4,6-ditertpentylphénol et/ou les esters d'alcools ramifiés et linéaires en $C_7$, $C_8$ et $C_9$ avec l'acide 3-(2H-benzotriazol-2-yl)-5-(1,1-diméthyléthyl)-4-hydroxy-benzènepropanoïque et/ou 2-(2H-benzotriazol-2-yl)-6-(1-méthyl-1-phényléthyl)-4-(1,1,3,3-tétraméthylbutyl)phénol et/ou 3-[3-t-butyl-4-hydroxy-5-(5-chloro-2H-benzotriazol-2-yl)phényl]-propionate d'octyle.

4. Ruban adhésif selon l'une quelconque des revendications précédentes, **caractérisé en ce qu'** un ou les dérivés de type malonate de [3,5-bis-(1,1-diméthyl-4-hydroxyphényl)méthyl]alkyle sont présents dans la masse autoadhésive d'acrylate en une quantité telle que le produit de l'épaisseur de la couche de masse autoadhésive d'acrylate et de la quantité des dérivés de type malonate de [3,5-bis-(1,1-diméthyl-4-hydroxyphényl)méthyl]alkyle contenus se situe au total dans la plage de 25 à 200 g*μm par 100 g du composant de type polymère, en particulier dans la plage de 40 à 150 g*μm par 100 g du composant de type polymère.

5. Ruban adhésif selon l'une quelconque des revendications précédentes, **caractérisé en ce qu'**en tant que dérivés de type malonate de [3,5-bis-(1,1-diméthyl-4-hydroxyphényl)méthyl]alkyle, des malonates de [[3,5-bis-(1,1-diméthyléthyl)-4-hydroxyphényl]méthyl]-butyle sont utilisés, préférablement des malonates de 3,5-bis-[1,1-diméthyléthyl)-4-hydroxyphényl]méthyl]-butyle substitués par pipéridinyle, très préférablement le malonate de bis(1,2,2,6,6-pentaméthyl-4-pipéridinyl)-[[3,5-bis-(1,1-diméthyléthyl)-4-hydroxyphényl]méthyl]-butyle.

6. Ruban adhésif selon l'une quelconque des revendications précédentes, **caractérisé en ce qu'** un ou les dérivés de type éthanediamide fonctionnalisé de manière diaromatique sont présents dans la masse autoadhésive d'acrylate en une quantité telle que le produit de l'épaisseur de la couche de masse autoadhésive d'acrylate et de la quantité des dérivés de type éthanediamide fonctionnalisé de manière diaromatique contenus se situe au total dans la plage de 25 à 200 g*μm par 100 g du composant de type polymère, en particulier dans la plage de 40 à 150 g*μm par 100 g du composant de type polymère.

7. Ruban adhésif selon l'une quelconque des l'une quelconque des revendications précédentes, **caractérisé en ce qu'**en tant que dérivé de type éthanediamide fonctionnalisé de manière diaromatique, le N-(2-éthoxyphényl)-N'-(2-éthylphenyl)éthanediamide est utilisé.

8. Ruban adhésif selon l'une quelconque des revendications précédentes, **caractérisé en ce qu'**en tant qu'additif supplémentaire, un ou plusieurs dérivés encombrés de la pipéridine sont mélangés.

9. Ruban adhésif selon la revendication 8, **caractérisé en ce qu'**un ou les dérivés encombrés de la pipéridine sont présents dans la masse autoadhésive d'acrylate en une quantité telle que le produit de l'épaisseur de la couche de masse autoadhésive d'acrylate et de la quantité des dérivés de type pipéridine diaromatique contenus se situe au total dans la plage de 25 à 200 g*μm par 100 g du composant de type polymère, en particulier dans la plage de 40 à 150 g*μm par 100 g du composant de type polymère.

10. Ruban adhésif selon l'une quelconque des revendications 8 et 9, **caractérisé en ce qu'**en tant que dérivé encombré de la pipéridine, le produit de réaction polymérique du 4-hydroxy-2,2,6,6-tétraméthyl-1-pipéridinéthanol ainsi que de l'ester de diméthyle de l'acide butanedioïque est utilisé.

11. Ruban adhésif selon l'une quelconque des revendications précédentes, **caractérisé en ce qu'**un ou les copolymères du composant de type polymère présentent à chaque fois un poids moléculaire moyen en poids $M_w$ dans la plage de 200 000 g/mole à 3 000 000 g/mole, mesuré au moyen d'une chromatographie à perméation de gel selon les indications dans la description.

12. Ruban adhésif selon l'une quelconque des revendications précédentes, **caractérisé en ce que** la masse autoadhésive d'acrylate est présente sans résine adhésive.

13. Ruban adhésif selon l'une quelconque des revendications précédentes, **caractérisé par** une épaisseur de la couche de masse autoadhésive d'acrylate dans la plage de 10 à 500 μm, préférablement dans la plage de 25 à 250 μm.

14. Ruban adhésif selon l'une quelconque des revendications précédentes, **caractérisé en ce qu'**il est réalisé en tant que ruban adhésif monocouche adhésif sur les deux faces, constitué de la couche de masse autoadhésive d'acrylate.

15. Ruban adhésif selon la revendication 14, **caractérisé en ce que** la couche de masse autoadhésive d'acrylate est couverte sur une face ou sur deux faces avec un matériau de support temporaire, en particulier avec un matériau antiadhésif.

16. Masse adhésive, en particulier masse autoadhésive, comprenant un composant de type polymère et au moins un additif,
le composant de type polymère étant formé à partir d'un ou plusieurs copolymères, qui sont issus à chaque fois des monomères suivants

    a) 5 à 35 % en poids d'un ou plusieurs monomères contenant un groupe hydroxy comportant une double liaison copolymérisable,
    b) 0 à 50 % en poids d'un ou plusieurs monomères de type acrylate et/ou méthacrylate comportant à chaque fois au moins un groupe amide, un groupe uréthane, un groupe urée, un motif de type anhydride d'acide carboxylique et/ou un motif de type éthylèneglycol,
    c) 15 à 95 % en poids d'un (méth)acrylate d'alkyle, le radical alkyle présentant 1 à 14 atomes de carbone,

    un ou plusieurs dérivés de type 2-(2H-benzotriazol-2-yle) étant mélangés en tant qu'additif à la masse autoadhésive d'acrylate,
    **caractérisée en ce qu'**un ou plusieurs dérivés de type malonate de [3,5-bis-(1,1-diméthyl-4-hydroxyphényl)méthyl]alkyle un ou plusieurs dérivés de type éthanediamide fonctionnalisé de manière diaromatique mélangés en tant qu'additifs supplémentaires.

17. Utilisation d'une masse adhésive selon la revendication 16 ou d'un ruban adhésif selon l'une quelconque des revendications 1 à 15 pour le collage de substrats sur des films électriquement conducteurs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20130085215 A
- US 2013085215 A
- EP 1323802 A
- EP 2284388 A


### In der Beschreibung aufgeführte Nicht-Patentliteratur


- **T.G. FOX.** *Bull. Am. Phys. Soc.,* 1956, vol. 1, 123